# EUROPEAN PATENT APPLICATION

(11) **EP 4 485 325 A2**
(43) Date of publication of application: **01.01.2025**
(21) Application number: 24178130.1
(22) Date of filing: 27.05.2024
(51) Int. Cl.: G06Q 30/018, G06Q 30/0601, H04L 9/00

(54) **SYSTEMS, METHODS, AND MEDIA FOR PREVENTING COUNTERFEITING USING NON-FUNGIBLE TOKENS**

(30) Priority: 06.06.2023 US 202318206531
(71) Applicant: PUMA SE, 91074 Herzogenaurach (DE)
(72) Inventor: LORETH, Ulla, 90489 Nürnberg (DE); NARRIMAN, Neil Jafar, 91074 Herzogenaurach (DE); DASHKOV, Ivan, Boston, 02128 (US)
(74) Representative: Gosdin, Carstensen & Partner Patentanwälte Partnerschaftgesellschaft mbB

(57) **Abstract**

A method of preventing counterfeiting using non-fungible tokens includes manufacturing a physical article with an ID tag that is configured to be recognized by a device that includes a user interface and communicates wirelessly over a communication network. The method further comprises providing a digital asset with a representation of the physical article and metadata, where the digital asset is cryptographically secured by a non-fungible token and the metadata includes a unique product identifier corresponding to the ID tag of the physical article. Further, the method comprises storing the non-fungible token on a blockchain and linking the ID tag of the physical article to the digital asset. When the ID tag is read by the device, the user interface of the device displays the cryptographically secured digital asset with the representation of the physical article.

## Description

### BACKGROUND

Techniques for preventing counterfeiting may be useful for organizations to protect their products from counterfeit products and imitators. Organizations, such as manufacturers of high-quality apparel and sporting goods articles, have long contended with counterfeit articles while building goodwill and trust with consumers in the marketplace. In particular, counterfeit articles are produced for the purpose of imitating articles produced by the true organization, which can dilute, confuse, and sometimes deceive purchasers into believing they are purchasing the true organization's high-quality articles, only to realize that a counterfeit article of lower quality and questionable value has been purchased. While this has occurred within the physical realm for a long time, similar issues now exist in the digital realm, where digital products or digital versions of physical products are often subject to unauthorized sale and reproduction. Just as in the physical realm, this unauthorized, counterfeit production and/or digital reproduction can dilute, confuse, and deceive an organization's brand, goodwill, and exclusivity, which can negatively affect the organization's profitability and reputation, and may compromise a user's subjective perception of the value, quality, authenticity, and sometimes "collectable" aspects of the organization's articles.

### SUMMARY

In accordance with some embodiments of the disclosed subject matter, systems, methods, and media for preventing counterfeiting using cryptographic tokens, e.g., non-fungible tokens, are provided.

In some aspects, a method of preventing counterfeiting using non-fungible tokens includes manufacturing a physical article with an ID tag that is configured to be recognized by a device that includes a user interface and communicates wirelessly over a communication network. The method further comprises providing a digital asset with a representation of the physical article and metadata, wherein the digital asset is authenticated or cryptographically secured by a non-fungible token and the metadata includes a unique product identifier corresponding to the ID tag of the physical article. Further, the method comprises storing the non-fungible token on a blockchain and linking the ID tag of the physical article to the digital asset. When the ID tag is read by the device, the user interface of the device displays the cryptographically secured digital asset with the representation of the physical article.

In some embodiments, the physical article is a pair of footwear. In some embodiments, the device is a smartphone. An online platform may be displayed on the user interface of the device when the ID tag is read. The online platform can comprise a plurality of cryptographically secured digital assets. In some embodiments, the metadata includes attributes associated with the physical article, the attributes including at least one of a color a size, a material, or a date of manufacture.

In some aspects, a method of preventing counterfeiting using non-fungible tokens comprises receiving data corresponding to an attribute of a digital article of footwear. The method further comprises manufacturing a physical article of footwear to include the attribute of the digital article of footwear. Further, the method comprises generating a digital asset cryptographically secured by a non-fungible token, wherein the digital asset is linked to the digital article of footwear by an address. The non-fungible token can comprise metadata corresponding to the attribute of the digital article of footwear and a date of manufacture of the physical article of footwear. In addition, the method comprises storing the non-fungible token in a blockchain network.

In some embodiments, the digital asset is configured to be transferrable to a third party. In some embodiments, the attribute includes at least one of a footwear color, a footwear size, a plate design, a signature, or a date of purchase. The non-fungible token can be a single token. In some embodiments, the non-fungible token is a collection of non-fungible tokens associated with a plurality of digital assets created, in part, using a permutation generator. In some embodiments, the blockchain network is a private blockchain network.

In some aspects, a method of preventing counterfeiting using non-fungible tokens comprises providing a network comprising a plurality of entities in communication with a private blockchain having a host administrator, wherein each entity has been granted limited access to the private blockchain, and wherein each entity maintains an inventory management system that is in communication with the private blockchain. The method further comprises receiving data associated with manufacturing physical footwear, the data containing a first detail and a second detail related to the footwear. Further, the method comprises recording the first detail and the second detail to the private blockchain, such that the first and second details are cryptographically secured by a non-fungible token. The method comprises generating notifications regarding the first detail and the second detail associated with the non-fungible token among the plurality of entities. The method further comprises updating the inventory management system of a first entity of the plurality of entities in accordance with the first detail. Further, the method comprises updating the inventory management system of a second entity of the plurality of entities in accordance with the second detail. Additionally, the method comprises recording a transaction related to the non-fungible token, wherein the transaction is triggered by any one of the plurality of entities.

In some embodiments, the first detail is at least one of a material, a size, a color, a model, or an optional feature. In some embodiments, the plurality of entities includes at least one of a shipping provider, a material supplier, an assembly supplier, or an ambassador. In some embodiments, a report is generated by the host administrator, the report containing a list of the transactions recorded on the private blockchain associated with the non-fungible token. The report may be stored on a public blockchain.

In some aspects, a method of preventing counterfeiting using non-fungible tokens comprises receiving data associated with a counterfeit product, wherein the data is received from a user registered with an online platform, the data including an address to an ecommerce site where the counterfeit product is offered for sale. The method further comprises generating a digital asset with a virtual object based on the data and cryptographically secured by a non-fungible token. Further, the method comprises storing the non-fungible token in a blockchain network. The method comprises generating a notification to the ecommerce site, wherein the notification includes the data. Additionally, the method comprises transferring the digital asset to the user via the online platform.

In some embodiments, the ecommerce site may be an individual seller, a marketplace, a distributor, a retailer, or a manufacturer. In some embodiments, the digital asset includes metadata corresponding to the user, the metadata including a score associated with the user on the platform. In some embodiments, a score associated with the ecommerce site is generated.

### BRIEF DESCRIPTION OF THE DRAWINGS

Various objects, features, and advantages of the disclosed subject matter can be more fully appreciated with reference to the following detailed description of the disclosed subject matter when considered in connection with the following drawings, in which like reference numerals identify like elements.
FIG. 1 depicts an example of a system for generating a non-fungible token to prevent counterfeiting in accordance with some embodiments of the disclosed subject matter;
FIG. 2 depicts an example of hardware that can be used to implement a computing device and a server, shown in FIG. 1 in accordance with some embodiments of the disclosed subject matter;
FIG. 3 depicts schematic representation of an example blockchain network according to some embodiments of the present disclosure;
FIG. 4 depicts another schematic representation of an example blockchain network according to some embodiments of the present disclosure;
FIG. 5 depicts a flowchart for an example method of generating a digital asset protected by a non-fungible token according to some embodiments of the present disclosure;
FIG. 6 depicts an example supply chain network according to an embodiment of the present disclosure;
FIG. 7 depicts a flowchart in connection with the supply chain network of FIG. 6 for an example of a method of preventing counterfeiting of articles of footwear using non-fungible tokens in accordance with some embodiments of the disclosed subject matter;
FIG. 8 depicts a flowchart for another example method of preventing counterfeiting of articles of footwear using non-fungible tokens in accordance with some embodiments of the disclosed subject matter;
FIG. 9 depicts a flowchart for yet another example method of preventing counterfeiting of articles of footwear using non-fungible tokens in accordance with some embodiments of the disclosed subject matter; and
FIG. 10 depicts a flowchart for still another example method of preventing counterfeiting of articles of footwear using non-fungible tokens in accordance with some embodiments of the disclosed subject matter.

### DETAILED DESCRIPTION

Manufacturers of high-quality articles of apparel and articles of footwear have long been plagued by the sale of counterfeits. Such imitation goods are made with the intent to deceive buyers into believing that they are purchasing the true manufacturer's authentic goods. Similar issues exist within the digital realm, where digital products are often subject to unauthorized sale and reproduction. An unauthorized or counterfeit production and/or digital reproduction of a digital product can erode a brand's value and/or exclusivity, can negatively affect a company's profitability, and may compromise a user's subjective perception of the digital product as a "collectable."

Market participants and brand enthusiasts in a free market typically assign a higher value to an object if there is limited supply and/or if there is excess demand for that object. While these realities are obvious in the physical real world (particularly to an avid collector), similar market realities also exist within a digital realm.

Within the physical world, many anti-counterfeiting techniques have been developed to assist in identifying counterfeit goods and to prevent illicit sales. However, conventional anti-counterfeiting techniques may be difficult to implement due to time-consuming training processes that may be needed for individuals to learn how to identify counterfeit goods. Further, imitators have become more sophisticated and adaptive over time, which has increased the pace at which anti-counterfeiting techniques must be developed and implemented.

Furthermore, within a digital realm (*e.g.,* a metaverse), supply is often unconstrained-if not by the original developer, then by a subsequent party who may freely (or illicitly) duplicate the digital object in its entirety. This often complicates a brand owner's ability to control the exclusivity of a digital object. Furthermore, lack of control over creation of digital objects may influence the value of the digital objects. The lack of control over digital object's exclusivity then erodes the opportunity for free brand promotion by product enthusiasts and collectors who are in search of that object.

With the proliferation of technology in everyday lives, there exists a need to relatively quickly and easily identify counterfeit physical products in the real world. Further, there exists a need to identify and prevent the supply of illicit digital assets in the digital realm.

The present application addresses these deficiencies and others. For example, some embodiments of the present disclosure include mechanisms (*e.g*., systems, methods, and media) for generating digital assets authenticated or cryptographically secured by cryptographic tokens, *e.g*., non-fungible tokens (NFTs), and correspond to physical objects (*e.g*., articles of apparel, or articles of footwear). More specifically, this disclosure relates to cryptographic digital assets for articles or objects, such as, *e.g*., tangible objects, including footwear, apparel, headgear, or sporting gear, among other products, such as, *e.g*., watches, luggage, jewelry, storage or shipping containers, artwork, mobile phones or smartphones, tablets, televisions or other electronic devices, refrigerators or other appliances, and vehicles or other machines, or the articles or objects may be intangible objects, including graphic designs, virtual avatars or characters, graphic user interfaces, or other forms of communication.

Further, this disclosure relates to cryptographic digital assets for methods for provisioning and methods for preventing counterfeiting of such cryptographic digital assets and articles, and decentralized computing systems with attendant blockchain control logic for mining, exchanging, collaborating, modifying, combining, and/or blending blockchain-enabled digital assets and articles. The presently described technology relies on the trust established in and by blockchain technology to enable a company to control the creation, distribution, expression, and use of digital objects that represent their brand. Unlike typical digital assets that are freely reproducible without loss of content or quality, the use of discrete recordation of ownership via blockchain technology eliminates the ability for simple digital reproductions of the digital objects. In doing so, the manufacturer has the ability to control or limit the overall supply of the digital objects or traits/aspects thereof and may create a controlled scarcity if so desired. The present disclosure contemplates that, in some examples, the digital object may be representative of: a physical object offered for sale; a 2D or 3D design rendering or design file that may be suitable for future production; a virtual representation of an object that is not presently intended for physical creation/production; or other such objects. Further, some embodiments of the present disclosure include mechanisms for generating cryptographic tokens using virtual reality (VR), augmented reality (AR), and/or graphical user interfaces (GUIs) on computing devices.

The present application further discloses mechanisms that bridge the divide between the physical world and the digital realm. For example, according to some embodiments of the present disclosure, individuals customize a digital product, mint an NFT of the digital product, and receive a physical product corresponding to both the digital product and the NFT. As another example, organizations may track and control physical inventory of raw materials for manufacturing, based on the generation of digital products (*e.g.,* NFTs) corresponding to physical products (*e.g.,* articles of manufacture, or articles of apparel).

By way of example, and not limitation, there are presented cryptographic digital assets that are provisioned through a blockchain ledger of transaction blocks and function, in part, to connect a real-world product, such as a physical shoe, to a virtual collectable, such as a digital shoe. As used herein, the term "user" is inclusive of a consumer, a purchaser, and a registered member of an online platform. When a consumer buys a genuine pair of shoes or footwear, a digital representation of a shoe may be generated, linked with the consumer, and assigned a cryptographic token, where the digital shoe and cryptographic token collectively represent a footwear NFT. The digital representation may include a computer-generated avatar of the shoe or a limited-edition artist rendition of the shoe. The digital asset may be secured by an encryption-protected block that contains a hash pointer as a link to a related block in a decentralized blockchain, a transaction timestamp, and transaction data. Using the digital asset, the buyer is enabled to securely trade or sell the tangible pair of shoes, trade or sell the digital shoe, store the digital shoe in a cryptocurrency wallet or other digital blockchain wallet, and, based on rules of acceptable shoe manufacturability, create a custom, made-as-new, tangible pair of shoes.

Further, users can develop a personal user account that is registered with the original manufacturer of the tangible shoes, *e.g.,* a Puma Fam account, which is linked to the user's cryptographic wallet and allows the user access to a platform for viewing, purchasing, selling, trading, minting, and burning digital assets and associated cryptographic tokens that may or may not be linked to or representative of tangible goods.

As used herein, "cryptographic digital assets," or simply "digital assets" may refer to any computer-generated virtual object, including digital footwear, apparel, headgear, avatars, art, collectables, tickets, coins, creatures, or sub-elements thereof, etc., among other virtual objects, that have a unique, non-fungible tokenized code ("token") registered on and validated by a blockchain platform or otherwise registered in an immutable database. Further, the digital asset may be a digital-art version of a tangible, physical object or an object disassociated with tangible, physical objects. For example, the digital asset may be a digital-art version of physical footwear having the same or substantially the same appearance. Alternatively, the digital asset may be digital footwear generated within the physical realm and without being connected to or representative of physical footwear. Further, the digital asset may become physical through various techniques, such as by manufacturing methods based on aspects of the digital footwear that are taken as inputs to create the physical footwear.

As used herein, the term "cryptographic token" is a digital unit of value that is stored/recorded on a blockchain. Cryptographic tokens include payment tokens, such as coins (e.g., Bitcoin), utility tokens, security tokens, and non-fungible tokens. As used herein, "non-fungible token" or "NFT" refers to a cryptoasset in the form of a unique, cryptographic token corresponding to a digital asset, including a computer-generated virtual object, such as, e.g., digital articles of footwear and/or digital articles of apparel. The NFT may be a blockchain-based deed of digital ownership and/or certificate of authenticity of a digital asset. As used herein, an NFT is not a digital asset, but is used to signify ownership of the digital asset. The NFT can be built in accordance with contemporary and relevant standards, such as, *e.g.,* an Ethereum Request for Comments (ERC) 721 (Non-Fungible Token Standard) or ERC1155 (Multi Token Standard) among other relevant standards and as appropriate for the particular blockchain network and applications used therewith. Further, an NFT is built on a "smart contract" that has particular conditions and terms attached to it for dictating various features and transactions associated with the NFT, which can impact the value or, at least, the perceived value of the NFT over time. In essence, the NFT represents authentication of the transaction and serves as a record of this authentication on a blockchain ledger (*e.g.,* Bitcoin, Ethereum, and the like). As such, the NFT itself may fluctuate in value depending on various aspects of the transaction, *e.g*., the parties involved, value exchanged, time and/or date, exclusivity, or combinations thereof, among other factors. Further, the number and/or frequency of transactions may also cause the NFT to fluctuate in value.

A digital asset can be accessible at a web address (i.e., the URI) that is referenced in the non-fungible token securing it. The web address can be a link which, when accessed, can serve the digital asset, or could serve information or metadata of the digital asset. Because of a cost associated with storing information in a non-fungible token, the token itself may contain only enough information to identify the digital asset and prove ownership, with the rest of the information about the digital asset residing on computer systems that are not themselves nodes in the blockchain. Accessing the web address can return a list of properties of the digital asset to the user through a graphical user interface, or, alternatively, in a format that is consumable by computer programs and applications that may access the digital asset. For example, the web address could return information about the digital asset in JSON format or XML format, and the address of the digital asset itself could be included in the list of properties. A digital asset representing a golf club could thus have properties specifying the type of club, a method of manufacturing used in making the club, a shaft length, a specification of handedness, a weight of the club, etc. In some cases, an address referenced in a non-fungible token could be an API endpoint that may vary information returned to the user, or implement a function based on the HTTP method through which the API endpoint is accessed. The API endpoint could allow a user or system to perform a GET, HEAD, PUT, or POST, for example, which could allow a digital property of the digital asset to be changed based on the operation performed. The GET and HEAD operations can be read-only operations, and can provide publicly available information about the digital asset without the need for authentication. Access to the write operations (*e.g*., POST, PUT) of the API endpoint referenced in an NFT can require authentication, and could thus only be accessible to the manufacturer of the NFT and digital asset, for example.

A "Uniform Resource Identifier" or "URI" is a unique sequence of characters that identifies a logical or physical resource used by web technologies. URIs may be used to identify any resource, including non-virtual objects, such as locations or people, or digital information resources, such as web pages. The URI can comprise a "Uniform Resource Name" ("URN") or a "Uniform Resource Locator" ("URL").

A "smart contract" is generally understood as an agreement that is in the form of a self-enforcing software program that runs on the blockchain network, so it is stored on a public database and is itself immutable. However, the terms within a smart contract, such as one in an NFT, are dictated by one or more of the parties. When creating a smart contract, a party or multiple parties may include programming to allow for negotiation, modification, full or partial acceptance, full or partial refusal, and, ultimately, full or partial enforcement or waiver. It will be appreciated that, as used herein, consideration is merely something of value given in exchange from one party to the other and may be real or personal property, such as, *e.g*., currency, or may be a return promise, an act, or forbearance. Additionally, options are contracts in which an offeree gives consideration for a promise by the offeror not to revoke an outstanding offer, and options can be provided as part of a larger contract or, alternatively, the option may be the foundation of the contract itself. A smart contract in an NFT may, but need not, be legally enforceable.

Some embodiments of the present disclosure are directed to computer-generated virtual or digital collectables or assets, such as digital articles of footwear, or digital articles of apparel (*e.g*., jackets, shirts, pants, shorts, hats, necklaces, watches). According to some embodiments, the digital collectables may be secured and/or uniquely identified by a cryptographic token, *e.g.,* an NFT. The digital asset may be linked and/or distributed with real-world, physical products, such as tangible articles of footwear and/or tangible articles of apparel. The digital assets may be linked or distributed with a 2D or 3D design file such as a computer-aided design (CAD) model, graphical rendering, image, or drawings package from which a physical product may be constructed or otherwise represented.

NFTs can be created, recorded, or "minted" into the blockchain ledger stored in the blockchain network, and thereby stored in memory of one or more of the blockchain nodes. Further, such cryptographic tokens can be destroyed or "burned" by permanent removal from circulation in the blockchain network. Burning can be accomplished in a variety of ways, including by transferring ownership of the cryptographic token to a general, null address that is inaccessible and unowned. Alternatively, burning can be accomplished by modification or destruction of metadata, *e.g*., a uniform resource locator (URL), included with the cryptographic token. Manufacturers, also referred to herein as brands or organizations, may burn cryptographic tokens to create scarcity within the marketplace, or to trigger a condition, or as a result of a condition, or for security purposes. For example, a brand may release, *e.g*., "drop," a collection of digital assets secured or identified by cryptographic tokens, and then may burn any unsold cryptographic tokens within the collection to preserve exclusivity of those sold. In another example, a brand may drop a collection of digital assets secured or identified by NFTs with the condition that purchasers may only have access to their purchased digital asset when all or a particular quantity of the collection has been purchased, which may be expedited by the brand then burning unsold NFTs to meet the condition prematurely.

There are several ways a user can be enabled to unlock or acquire a cryptographic asset. In one example, upon scanning the physical footwear at a point-of-sale (POS) terminal during first purchase, a unique NFT and corresponding private key are automatically generated and assigned to the user's blockchain wallet. In another example, a private key is provided to the user via a printed or digital receipt, a visual or electronic ID tag (RFID or NFC) hidden in or applied to the physical footwear, a pop-up message or email sent to a personal user account, a push notification or text message sent to a smartphone, or some other record; the consumer uses the private key to link the cryptographic asset to their digital blockchain wallet. Another example may require the user to assemble the private key in part via a physical code or Unique Product Identifier (UPID), *e.g.,* a serial number, associated with the shoe (on the packaging or box, on a hang tag, under a label, on an insole, embedded within a QR code on the physical footwear or packaging, embedded within a colorway pattern or sole tread pattern, etc.) and in part via a transaction authentication code (*i.e.,* to prevent a consumer from collecting a cryptographic asset while merely trying shoes on).

In some embodiments, a Brand provides a first portion of the private key with a product, *e.g.,* an article of footwear, in physical form, *e.g*., printed, adhered, fastened, or the like, and a second portion of the private key is communicated by the Brand directly to a consumer, *e.g*., via email or text message or telephonic call or push notification, by accessing an online platform that requires registration and/or login credentials, or the like. In some embodiments, the Brand provides the first portion of the private key with the product and the second portion of the private key is provided to a retailer of the product, such that only via transaction or purchase of the product may a consumer receive the second portion of the private key from the retailer for assembly with the first portion of the private key. In some embodiments, the private key is divided into a plurality of portions that are acquired by the consumer via an online platform that requires registration and/or login credentials. For example, the online platform may allow a user to acquire successive portions of the private key by participation in a game, such that completion of each level of the game unlocks another portion of the private key. In some embodiments, the online platform permits the consumer to unlock portions of the private key through completion of tasks, e.g., watching advertisements, submitting feedback or reviews, or the like.

Another example may require the user to "seek" for cryptographic assets in stores, whether physical stores or virtual stores inside a metaverse or game, by using a photographic capture function or augmented reality ("AR") function on a handheld personal computing device. For this method, a private key may be provided via the validated transaction, however, the user must separately find a hidden cryptographic asset in an AR hidden within the store or local area before the digital asset can be transferred to their wallet (*i.e.,* the cryptographic key and the virtual object must both be separately acquired before the transfer occurs).

In a representative example, an authenticated pair of physical footwear are created and assigned a UPID. Upon purchase by a consumer, the UPID may be used to unlock a cryptographic digital asset composed of a collectable digital shoe and a unique non-fungible token (NFT) operating on a block-chain based distributed computing platform. In general, a consumer must have or procure a blockchain wallet address (*e.g*., an Ethereum hardware wallet) to purchase, unlock, or acquire a cryptographic asset. The blockchain wallet may be used to store a private key belonging to the cryptographic asset and may be linked to a personal account that is registered with the original manufacturer of the physical footwear.

In some instances, the cryptographic asset may not be originally linked to a physical product, but instead may be gifted or sold as part of a brand promotion campaign, event, moment, or experience. In some instances, the brand may host or commission a raffle, a game, a contest or other virtual promotion campaigns, events, moments, or experiences for which digital assets may be gifted or sold, or for which NFTs may be generated as proof of attendance or as tickets for entry, among other examples.

### Structure of an NFT Corresponding to Physical Attributes of an Article

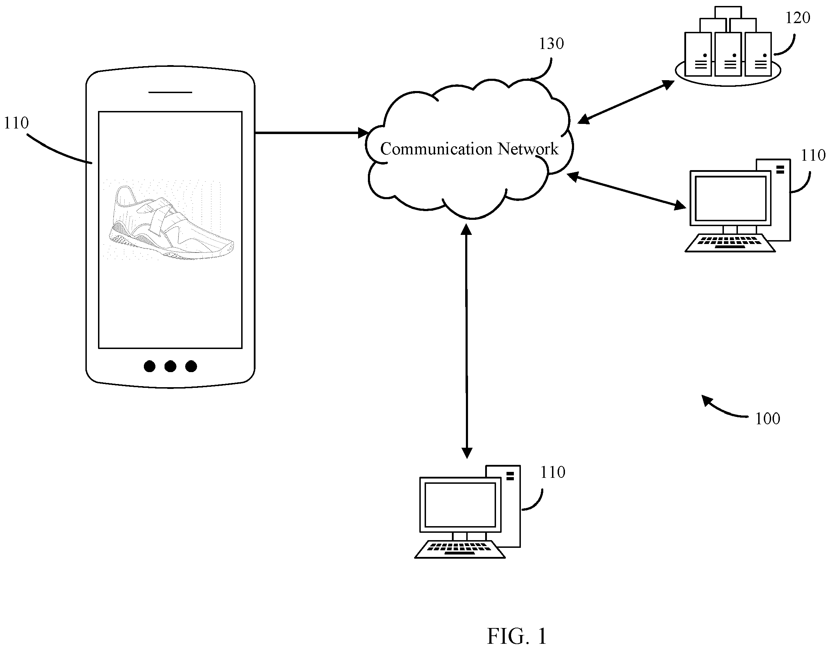

FIG. 1 illustrates an example system 100 for generating a footwear NFT corresponding to a paired digital and physical article of footwear in accordance with some embodiments of the disclosed subject matter. As shown in FIG. 1, the system may include one or more computing devices or user devices 110, and one or more servers 120. The digital article of footwear may include a toe, a heel, an outsole, a midsole, an upper, a toe support, an insole, a plate, and/or a heel support (not shown).

Still referring to FIG. 1, the one or more computing devices 110 can receive data corresponding to one or more digital articles of footwear. Additionally, or alternatively, the one or more computing devices 110 can receive input data from a user that correspond to attributes of one or more digital articles of footwear. The one or more computing devices 110 can execute at least a portion of the system 100 to generate one or more NFTs corresponding to the one or more digital articles of footwear. Additionally, or alternatively, the one or more computing devices 110 can communicate data corresponding to the one or more digital articles of footwear to one or more servers 120 over one or more communication networks or connections 130.

The one or more servers 120 can execute at least a portion of the system 100. In such embodiments, the one or more servers 120 can receive data corresponding to one or more digital articles of footwear. Additionally, or alternatively, the one or more servers 120 can receive inputs from a user that correspond to attributes of one or more digital articles of footwear. The one or more servers 120 can execute at least a portion of the system 100 to generate one or more NFTs corresponding to the one or more digital articles of footwear.

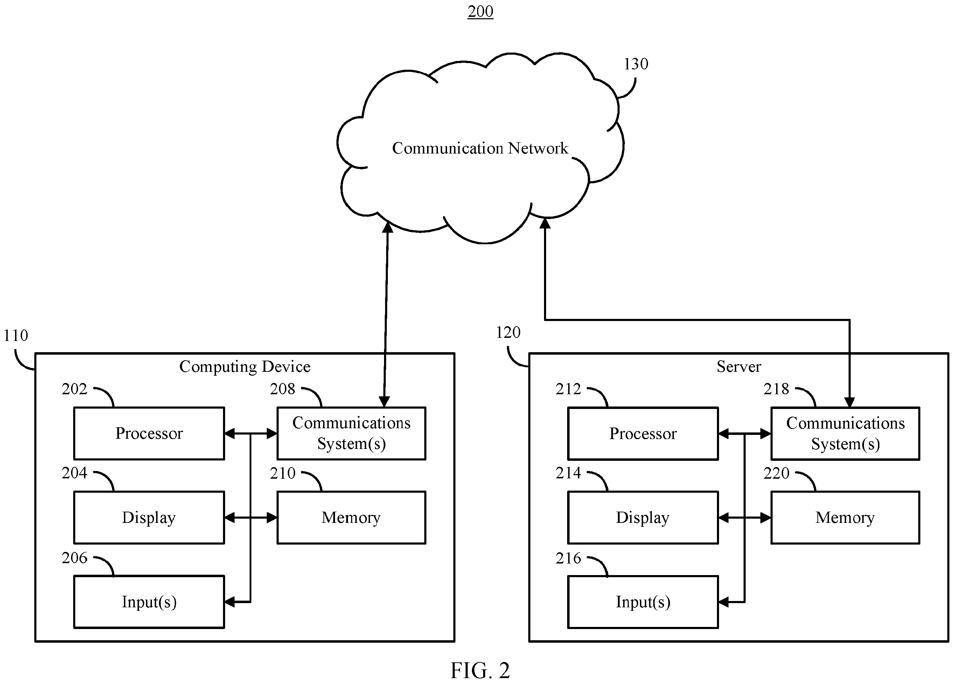

FIG. 2 shows an example of hardware 200 that can be used to implement computing device 110 and/or server 120 in accordance with some embodiments of the disclosed subject matter. As shown in FIG. 2, in some embodiments, computing device 110 can include a processor 202, a display 204, one or more inputs 206, one or more communication systems 208, and/or memory 210. In some embodiments, processor 202 can be any suitable hardware processor or combination of processors, such as a central processing unit (CPU), a graphics processing unit (GPU), an application specific integrated circuit (ASIC), a field-programmable gate array (FPGA), *etc.* In some embodiments, display 204 can include any suitable display devices, such as a computer monitor, a touchscreen, a television, *etc.* In some embodiments, inputs 206 can include any suitable input devices and/or sensors that can be used to receive user input, such as a keyboard, a mouse, a touchscreen, a microphone, a camera, etc.

In some embodiments, communications systems 208 can include any suitable hardware, firmware, and/or software for communicating information over communication network 130 and/or any other suitable communication networks. For example, communications systems 208 can include one or more transceivers, one or more communication chips and/or chip sets, *etc.* In a more particular example, communications systems 208 can include hardware, firmware and/or software that can be used to establish a Wi-Fi connection, a Bluetooth connection, a cellular connection, an Ethernet connection, etc.

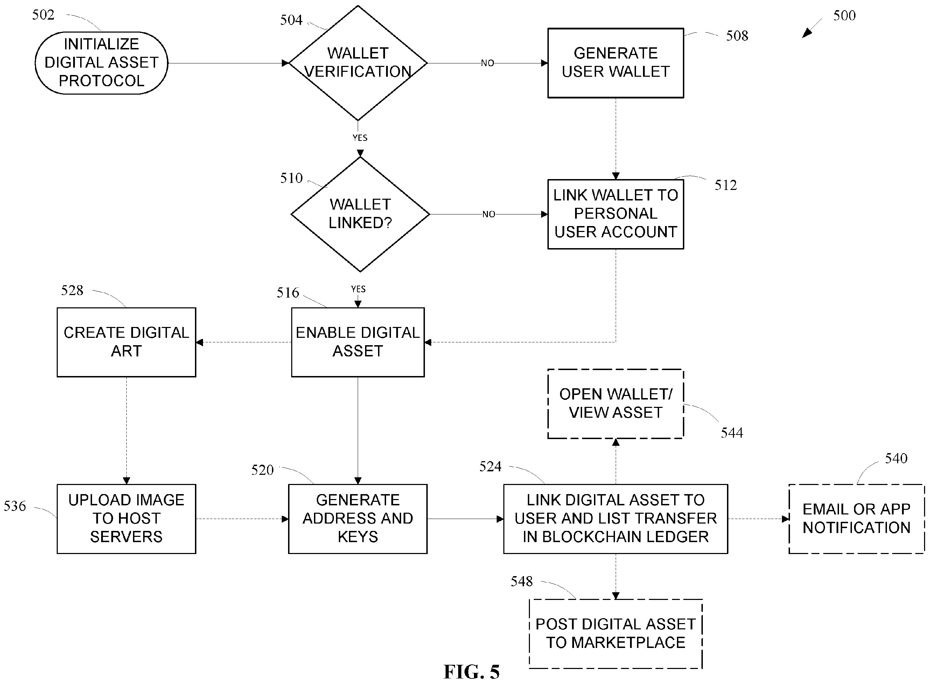

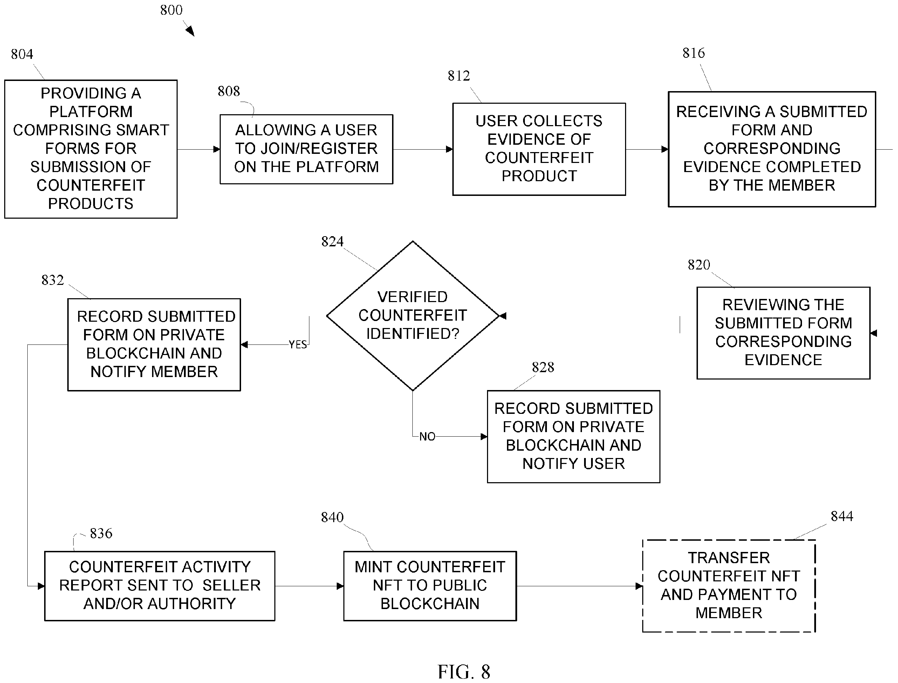

In some embodiments, memory 210 can include any suitable storage device or devices that can be used to store instructions, values, *etc.*, that can be used, for example, by processor 202 to generate a non-fungible token, to present a digital asset using display 204, to communicate with server 120 via communications system(s) 208, *etc.* Memory 210 can include any suitable volatile memory, non-volatile memory, storage, or any suitable combination thereof. For example, memory 210 can include random access memory (RAM), read-only memory (ROM), electronically-erasable programmable read-only memory (EEPROM), one or more flash drives, one or more hard disks, one or more solid state drives, one or more optical drives, *etc.* In some embodiments, memory 210 can have encoded thereon a computer program for controlling operation of computing device 110. For example, in such embodiments, processor 202 can execute at least a portion of the computer program to receive inputs from a graphical user interface for customizing an article of footwear, store in memory an image of a digital asset based on the user's customizations, generate a non-fungible token based on the digital asset, mint the non-fungible token to a blockchain network made up of computing devices 110 and/or servers 120. As another example, processor 202 can execute at least a portion of the computer program to implement the system 100 for generating an NFT corresponding to a paired digital and physical article of footwear. As yet another example, processor 202 can execute at least a portion of process 500, 700, 800, 900, and 1000 described below in connection with FIGS. 5 and 7-10.

In some embodiments, server 120 can include a processor 212, a display 214, one or more inputs 216, one or more communications systems 218, and/or memory 220. In some embodiments, processor 212 can be any suitable hardware processor or combination of processors, such as a CPU, a GPU, an ASIC, an FPGA, *etc.* In some embodiments, the display 214 can include any suitable display device, such as a computer monitor, a touchscreen, a television, *etc.* In some embodiments, inputs 216 can include any suitable input devices and/or sensors that can be used to receive user input, such as a keyboard, a mouse, a touchscreen, a microphone, a camera, *etc.*

In some embodiments, communications systems 218 can include any suitable hardware, firmware, and/or software for communicating information over communication network 108 and/or any other suitable communication networks. For example, communications systems 218 can include one or more transceivers, one or more communication chips and/or chip sets, *etc.* In a more particular example, communications systems 218 can include hardware, firmware and/or software that can be used to establish a Wi-Fi connection, a Bluetooth connection, a cellular connection, an Ethernet connection, *etc.*

In some embodiments, memory 220 can include any suitable storage device or devices that can be used to store instructions, values, *etc.*, that can be used, for example, by processor 212 to present content using display 214, to communicate with one or more computing devices 110, *etc.* Memory 220 can include any suitable volatile memory, non-volatile memory, storage, or any suitable combination thereof. For example, memory 220 can include RAM, ROM, EEPROM, one or more flash drives, one or more hard disks, one or more solid state drives, one or more optical drives, *etc.* In some embodiments, memory 220 can have encoded thereon a server program for controlling operation of server 120. For example, in such embodiments, processor 212 can execute at least a portion of the server program to receive inputs from a GUI for customizing an article of footwear, store in memory (*e.g*., memory 220) an image of a digital asset based on the user's customization, generate an NFT based on the digital asset, and/or mint the NFT to a blockchain network made up of computing devices 110 and/or servers 120. As another example, processor 212 can execute at least a portion of the server program to implement the system 100 for generating an NFT corresponding to a paired digital and physical article of footwear. As yet another example, processor 202 can execute at least a portion of process 500, 700, 800, 900, and 1000 described below in connection with FIGS. 5 and 7-10.

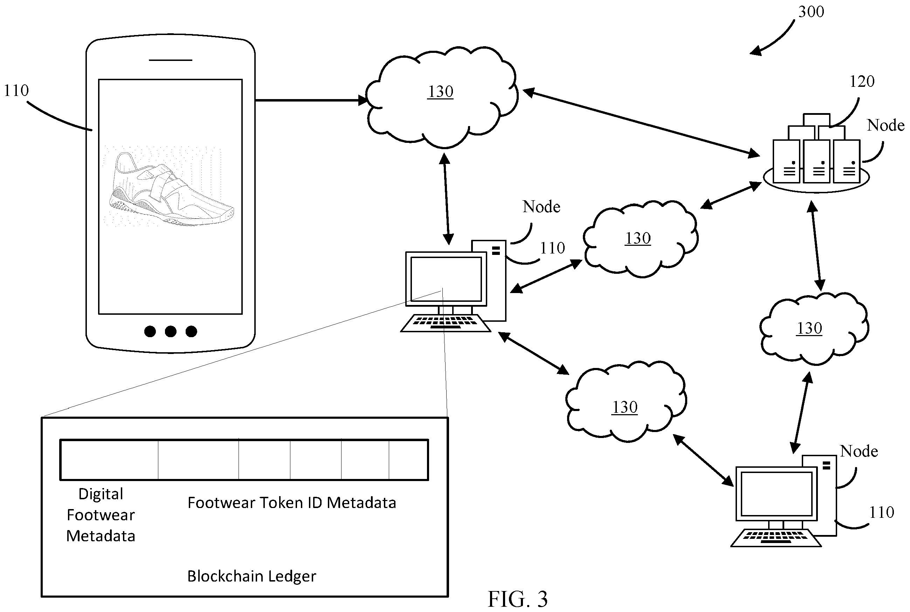

FIG. 3 illustrates an example blockchain network 300 according to some embodiments of the present disclosure. The blockchain network 300 may include one or more blockchain nodes. The blockchain nodes may each be a computing device 110 (*e.g*., similar to computing device 110 of FIGS. 1 and 2), or a server 120 (*e.g.,* similar to server 120 of FIGS. 1 and 2) that are in communication with one another (*e.g*., via a communication network similar to the communication network 130 of FIGS. 1 and 2). The footwear NFT may be stored in a blockchain ledger stored on one or more of the blockchain nodes (*e.g*., "minted" into the blockchain ledger stored in the blockchain network, and thereby stored in memory of one or more of the blockchain nodes). For example, metadata of the footwear NFT may be stored in memory on a local computing device (*e.g*., computing device 110), and may be copied into the memory of one or more blockchain nodes (*e.g*., servers, such as server 120, and/or computing devices that may be similar to computing device 110). The one or more blockchain nodes may be responsible for storing data that is contained in the blockchain ledger. Each of the one or more blockchain nodes may store (*e.g.,* in memory, such as, memory 210 or 220) a copy of the blockchain ledger (*e.g.,* a deed tracking various transactions of, and modifications to, a digital asset, such as a digital article of footwear).

The one or more blockchain nodes may each be a computing device located at one or more geographic locations, thereby creating a decentralized computing architecture. The blockchain network may be a public network (*e.g.,* available to any user), or a private network (*e.g.,* available to a specific set of users). For example, an organization may develop an application for storing NFTs corresponding to both digital and physical products (*e.g*., articles of footwear, or articles apparel). The application may be a mobile application, or desktop application, or web-based applet, comprising computer-readable instructions stored in, for example, memory 210 or 220, and configured to be executed by, for example, processor 202 or 212 (see FIG. 2). Any user who downloads the application onto a computing device, may then add their computing device to the blockchain network as a blockchain node. In some embodiments, the blockchain network may be private and, thus, limited to users who download the organization's application and obtain authorization to participate. If the application is available to the public, then the blockchain network may be a public network. However, if the organization restricts who has access to the application, or restricts authorization for select individuals who download the application from becoming a blockchain node, then the blockchain network may be a private network, such as *e.g.*, a permissioned network. Generally speaking, the permissioned network is a distributed ledger that is not publicly accessible and can only be accessed by users with certain permissions, and the users can only perform specific actions granted to them by the central owner or the ledger administrators and are required to identify themselves through certificates or other digital means. In some embodiments, the blockchain network may be a known blockchain network (*e.g*., Bitcoin, Ethereum, or the like), and the permissioned network may be a sub-set or service associated with a known blockchain network.

The blockchain network may be an open, yet encrypted peer-to-peer network in which asset transaction records are linked via cryptographic hash functions in a distributed, immutable ledger of interconnected blocks. Each blockchain node may contain a ledger of blocks that includes one or more digital asset transactions accompanied by corroboration information representing a validity of each transaction as assessed by peer-validation devices (*e.g*., the other blockchain nodes in the blockchain network). Encrypted, decentralized computing architectures allow for authentication of transacted assets while preventing duplication of a cryptography-protected ("cryptographic") digital asset registered to the blockchain network. Decentralized asset management may work by encrypting a proprietary asset file, breaking the encrypted code into segments, and sending the segments to numerous different blockchain nodes (*e.g.,* the blockchain nodes) in the blockchain network. A validated owner may be provided with a private key that indicates where in the network the digital asset is located and how to reassemble or "decrypt" the file. For use as a distributed ledger, an individual blockchain may be managed by a host administrator and distributed to multiple peers collectively adhering to a protocol for inter-node communication and transaction validation.

The footwear NFT may be a digital asset stored in the blockchain network. The footwear NFT may include metadata corresponding to a digital footwear (*e.g*., 2D representation, or a 3D representation of a virtual article of footwear), and a footwear token ID. The footwear token ID may be a 32-bit, 64-bit, or 128-bit alphanumeric code that is sectioned into individual segments. For example, the alphanumeric code may be sectioned into 2 segments, 4 segments, 8 segments, 16 segments, or 32 segments. One or more of the code segments may correspond to common attributes between the digital footwear and a physical footwear corresponding to the digital footwear. Additionally, or alternatively, the one or more code segments may correspond to attributes of solely the physical footwear, or solely the digital footwear. For instance, the footwear NFT and token can be built in accordance with contemporary and relevant standards, such as, *e.g.*, an Ethereum Request for Comments (ERC) 721 (Non-Fungible Token Standard) or ERC1155 (Multi Token Standard), among other relevant standards and as appropriate for the particular blockchain network and applications used therewith.

For example, the code segments may include metadata corresponding to one or more attributes from the group of: a footwear image, footwear size, footwear style, footwear fit, footwear color, outsole pattern, location of manufacture, date of manufacture, or date of purchase. Additional combinations of the above-listed attributes should be recognized by those of ordinary skill in the art.

The attribute footwear style may comprise metadata corresponding to Lows, Mids, Sandals, or Boots. The footwear size may comprise metadata corresponding to 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, or 18.5 in U.S. Men's sizes. It should be understood that metadata may correspond to similar sizes in Women's sizes, children's sizes, unisex sizes, and footwear size measurements of foreign countries. The footwear color segment may comprise metadata corresponding to Black, Gray, Brown, Blue, Green, Orange, Tan, Yellow, Red, White, Multi-Colored, or Pink. The footwear style segment may comprise metadata corresponding to Basketball, Running, Motorsport, Soccer, or Training. The footwear fit segment may comprise metadata corresponding to Regular fit, or Narrow fit.

One should appreciate that the disclosed systems and techniques provide many advantageous technical effects including construction and storage of a digital asset blockchain representing user-to-user transactions of virtual collectables. Further the blockchain technology enables the creation of unique, yet fully transferrable digital assets that maintain value by way of the general inability to make lossless copies (unlike traditional, unsecured digital files).

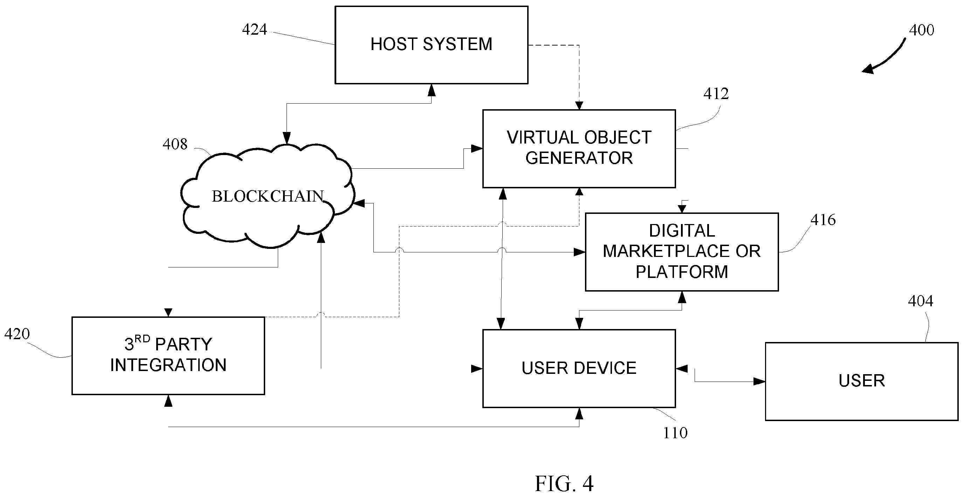

FIG. 4 provides a schematic representation of a functional structure of a decentralized computing system or blockchain network 400, similar to the blockchain network 300 of FIG. 3. As generally illustrated, a user 404 may operatively interface with the user device 110 that may include one or more of a smartphone, a tablet computer, a smart watch, a laptop computer, a desktop computer, a standalone video game console, smart footwear/apparel, or other similar internet enabled devices, *e.g.,* a television, an exercise machine or device, or a vehicle, among other examples. The user device 110 may be operatively configured to communicate with one or more of an immutable public database (*e.g*., a blockchain service/network 408-referred to as "blockchain network 408"), a virtual object generator 412, an online digital marketplace or platform 416, and/or a third (3^{rd}) party integration service 420.

In general, the blockchain network 408 may include at least one non-fungible token registered thereon that includes information representative of a digital asset. The user 404, via the user device 110, may be in possession of or may have a wallet that includes a private cryptographic key that permits the user device to read the encrypted data associated with the token. This key may further enable the user 404 to freely transfer ownership of the token.

A virtual object generator 412 may be provided to create a digital object on the basis of the information associated with the token. The virtual object generator 412 may employ a plurality of style and artistic rules such that the resultant digital objects are unique, yet recognizable according to predefined silhouettes, styles, articles, or characters. In some embodiments, or on the basis of auxiliary factors, such as the age of the asset, user activity (tracked via the user device), or use via third party platform. The virtual object generator 412 and/or blockchain network 408 may further be in communication with a hosted digital marketplace 416, forum, social platform, or the like. The digital marketplace may represent a plurality of virtual objects in a manner that permits the organized trade and/or sale/purchase of the virtual objects between parties. Upon closing of the sale or transfer, the digital marketplace 416 may update the blockchain network 408 with the new ownership information and facilitate the transfer of new or existing keys to the new asset holder.

In some embodiments, the marketplace 416 may further enable various social engagement functions, such as voting or commenting on the represented virtual objects. Likewise, in some instances the marketplace 416 may be configured to assess and score the scarcity of a particular virtual object based on the sum total of the object's expressed features or characteristics, as well as consideration of any of the auxiliary factors. Such a scarcity score may then enable the marketplace (and/or users who participate within the marketplace) to better assess the value of the object.

Further, the system 400 may further include a 3rd party integration service 420 that may enable the use of the virtual object in different contexts or manners. The 3rd party integration service 420 may operate as an API on an app provided on the user's device, or as a dedicated cloud based service. In some embodiments, the 3rd party integration service 420 may make the virtual object (*e.g.,* as expressed by the virtual object generator 412), and/or the information available for external use. Examples of such a use may include skins on 3rd party video game characters, objects capable of being used by 3rd party video game characters, digital artwork displays, physical 2D print generation, manufacturing production, such as, *e.g.,* 3D print generation, and the like. In one embodiment, the information and/or scarcity score may be made available and may alter the characteristics or abilities of a user's video game character in a video game played on the user's device 110.

A corporate host system 424 may be in communication with the blockchain network 408 for the purpose of provisioning and/or initially creating new digital assets. Additionally, the host system 424 may provide one or more rules to the virtual object generator 412 to constrain the manner and style in which genomic information from the blockchain network 408 is expressed in a visual/artistic form.

With reference to FIG. 5, a method of generating a digital asset protected by NFTs on a blockchain ledger is generally described in accordance with aspects of the present disclosure. Some or all of the operations in FIG. 5 and described in further detail below may be representative of an algorithm that corresponds to processor-executable instructions that may be stored, for example, in main or auxiliary remote memory, and executed, for example, by a resident or remote controller, central processing unit (CPU), control logic circuit, or other module or device or network of devices, to perform any or all of the above or below described functions associated with the disclosed concepts. It should be recognized that the order of execution of the illustrated operation block may be changed, additional blocks may be added, and some of the block described may be modified, combined, or eliminated.

The method 500 of FIG. 5 starts at terminal block 502 with processor-executable instructions for a programmable controller or control module or similarly suitable processor to call up an initialization procedure for a protocol to generate a cryptographic digital asset, such as a computer-generated digital shoe and encrypted token key, for a consumer product. This routine may be called-up and executed in real-time, continuously, systematically, sporadically, and/or at regular intervals. As a representative implementation of the methodology set forth in FIG. 5, the initialization procedure at block 502 may automatically commence each time a pair of authentic footwear is manufactured, at various stages of the supply chain and manufacturing process, each time a user 404 purchases a real-world pair of the footwear, or each time the user 404 unlocks an access key. Alternatively, the initialization procedure may be manually activated by an employee at a POS terminal or by the manufacturer.

Using a user device 110, such as, *e.g.,* a portable electronic device, including a smartphone, or other electronic device, the user 404 may launch a dedicated mobile software application (app) or web-based applet that collaborates with a server-class (backend or middleware) computer (*e.g*., a remote host system) to communicate with the various peer devices on the decentralized computing system 400. During a communication session with, *e.g.,* the host system 424, the user 404 may purchase a pair of the footwear using a corresponding feature provisioned by the app. The user 404 enters the personal information and a method of payment to complete the transaction. Upon completion of a validated payment, the host system 424 receives, *e.g*., from an online store transaction module or an approved third-party electronic payment system, a transaction confirmation to indicate a validated transfer of the footwear to the user 404 has been completed. As indicated above, validated transfer of the footwear may be effectuated through any available means, including at a brick-and-mortar store, through an online auction website, an aftermarket consumer-to-consumer trade/sale, etc.

Next, the method 500 proceeds to decision block 504 to determine if the user 404 has procured a cryptocurrency wallet or other similarly suitable digital blockchain account that is operable, for example, to upload and maintain location and retrieval information for digital assets that are encrypted and stored in a decentralized manner. A cryptocurrency wallet typically stores public and private key pairs, but does not store the cryptocurrency itself; the cryptocurrency is decentrally stored and maintained in a publicly available blockchain ledger. With the stored keys, the owner may digitally sign a transaction and write it to the blockchain ledger. A platform-dictated smart contract associated with the wallet may facilitate transfer of stored assets and create a verifiable audit trail of the same. If the user 404 has not already acquired a digital blockchain wallet, the method 500 continues to predefined process block 508 to set up a wallet. By way of non-limiting example, user 404 may be prompted to visit or may be automatically routed to any of an assortment of publicly available websites that offer a hardware wallet for cold storage of cryptocurrency such as an ERC20-compatible Ethereum wallet provided by MyEtherWallet, or Metamask, among other viable sources or providers.

Once the system confirms that the user 404 has a suitable digital blockchain wallet at block 504, the method 500 may check if the wallet is linked to a personal user account at decision block 510. In some instances, the user 404 may have already linked a wallet to a user account in a prior transaction, and thus, the method 500 could proceed to process block 516. Where the user 404 has not linked their wallet, the method 500 may automatically link, or prompt the user 404 to link, the digital blockchain wallet to a personal user account, as portrayed at process block 512 of FIG. 5. This linking at process block 512 may proceed automatically if a wallet was generated at process block 508, without the need to perform a check at decision block 510 of whether the wallet has been linked. Linking a wallet to a personal account at process block 512 may require the remote host system 424 retrieve a unique owner ID code associated with the purchasing party (*e.g*., user 404) from an encrypted relational database, *e.g*., provisioned through cloud computing system 130. At this time, a unique physical golf club ID code associated with the purchased golf club may be linked to the user's personal account.

Upon determining that the user 404 has acquired a digital blockchain wallet, *i.e*., block 504 = YES, and that the wallet is linked to a personal user account, *i.e.*, block 510 = YES, or after linking the user's blockchain wallet to their personal user account at block 512, the method 500 continues to input/output block 516 to enable a cryptographic digital asset associated with the golf club. As indicated above, after purchasing the golf club, the universally recognized UPID product code may be used to retrieve a collectable golf club NFT which is identified by an encrypted token key, and is generally associated with a collectable digital golf club. In some embodiments, the UPID may be used to trigger a function of the golf club NFT, such as compensation for a third party, *e.g.,* a fitter, associated with or identified by the metadata of the golf club NFT. A third-party or a retailer at a POS terminal or the user 404 employing their user device 110 may scan the UPID or UPC on the golf club or a box storing therein the golf club. Accordingly, enabling a cryptographic digital asset, at block 516, may be automatic, random, systematic, prize based, or any logically appropriate manner.

After receiving confirmation that a cryptographic digital asset has been authorized at input/output block 516, the method 500 generates a cryptographic digital asset for the transacted golf club. This may comprise generating a unique, encrypted asset code with a contract address (*i.e.,* the address where the smart contract is deployed on the blockchain network), a token, and a public and private key pair, as denoted at predefined process block 520. Host system 424 may transmit the token, with the public key and the owner ID, to a distributed blockchain ledger to record and peer-validate transfer of the cryptographic digital asset to the user 404 on a transaction block. Host system 424 can also store the metadata of the digital asset, and/or the digital asset itself, which can be accessed via the address provided in the NFT. The method 500 continues to process block 524 to link the cryptographic digital asset with the unique owner ID code. This control logic may comprise executable instructions for assigning the encrypted asset code to the user 404 and storing the public and private keys in the user's digital blockchain wallet.

As shown in FIG. 5, once the digital asset has been linked to a user, as through transfer to the user of the NFT securing the digital asset, optional process block 540 may issue a digital notification, such as an email or push notification, to the user's smartphone 110, or other electronic device, with all related information for accessing, transferring, and intermingling the cryptographic digital asset. Additionally or alternatively, the remote host system 424 may operate as a web server hosting a web-based graphical user interface (GLTI) that is operable to translate the data stored in the encryption keys into a visual image that is displayed to the user 404 at optional process block 544. Digital asset manipulation and use may also be effectuated through the user's digital blockchain wallet. This may comprise posting the cryptographic digital asset to an online crypto-collectable marketplace or platform, as provided in optional process block 548.

With continuing reference to FIG. 5, in some embodiments, after a digital asset is enabled or initialized at block 516, the method 500 can proceed to process block 528 to produce a virtual representation or "digital art" of the cryptographic digital asset. The virtual representation may include a computer-generated avatar of the golf club or a limited-edition artist rendition of the golf club. It is also envisioned that one or more attributes of the virtual representation of the cryptographic digital asset may be created, in whole or in part, via the user 404. Alternatively, a machine learning function may be executed to generate image features through a neural network to produce the digital art at process block 528. Upon completion of the digital art, the image may be uploaded to host servers 140 at block 536, and the digital art can be included as part of the digital asset.

Generally, by incorporating metadata into the non-fungible token (NFT) that corresponds to attributes of a physical footwear, the digital footwear corresponding to the NFT will be linked to the physical footwear. For example, the digital footwear may appear to be the same size, color, and material on a display screen (*e.g*., display screen of computing device 110) as a corresponding physical article of footwear. In some embodiments, the metadata includes reference to a UPID that corresponds to the physical code, or a version thereof, associated with the physical footwear, thereby linking the footwear NFT to the physical footwear in a one-to-one fashion. In some embodiments, the footwear NFT may be provided as a collection or family of footwear NFTs having, *e.g*., variations or permutations in attributes or appearance or underlying metadata, but with each footwear NFT in the collection being linked to the same physical footwear by way of reference to the UPID in the metadata. In this way, one common physical footwear can be linked across multiple footwear NFTs that are generated as a collection of footwear NFTs each containing unique digital footwear. The footwear NFTs can, therefore, be a collection of two (2) or more, such as, *e.g.,* a collection of 3, 4, 5, 6, 7, 8, 9, 10, 11, 12, or more, a collection of 20 or more, a collection of 50 or more, a collection of 100 or more, a collection of 250 or more, or a collection of 500 or more.

### Supply Chain Management

Products are often associated with a supply chain that spans from sourcing of the raw materials or inputs, e.g., comprising a Bill of Materials, for the product all the way to delivery of the product to the consumer. Accordingly, each aspect of the supply chain may be tokenized and recorded/stored on the blockchain. Products, e.g., the digital article of footwear in FIG. 1, may be linked to a Bill of Materials. For example, since the size and materials of the article of an footwear, or article of apparel, may be stored in the metadata of the NFT, mechanisms described herein may calculate the quantity of a material that is required to create the article of footwear, or article of apparel. Additionally, or alternatively, the quantity of a material that is required to create the article of footwear, or article of apparel may be pre-known information.

The quantity of materials for a warehouse may be stored in an inventory management system, such as, *e.g*., software that tracks and updates inventory through solutions provided by Manhattan Associates, or other providers. Each time an NFT is minted for an article of apparel, or an article of footwear, the inventory management system may update its quantities for materials based on the Bill of Materials for the NFT that was minted. For example, if a product requires 0.25 lbs of thermoplastic polyurethane, then the inventory management system can reduce the available quantity of thermoplastic polyurethane by 0.25 lbs when a digital representation of the product is minted.

Furthermore, the inventory management system may have minimum and/or maximum thresholds for quantities of materials in inventory. For example, a maximum threshold for a material may be the maximum amount of that material that can be stored in one or more warehouses that store the given material. A minimum threshold for a material may be the minimum amount of that material that an organization is willing to have available, before ordering more of the material.

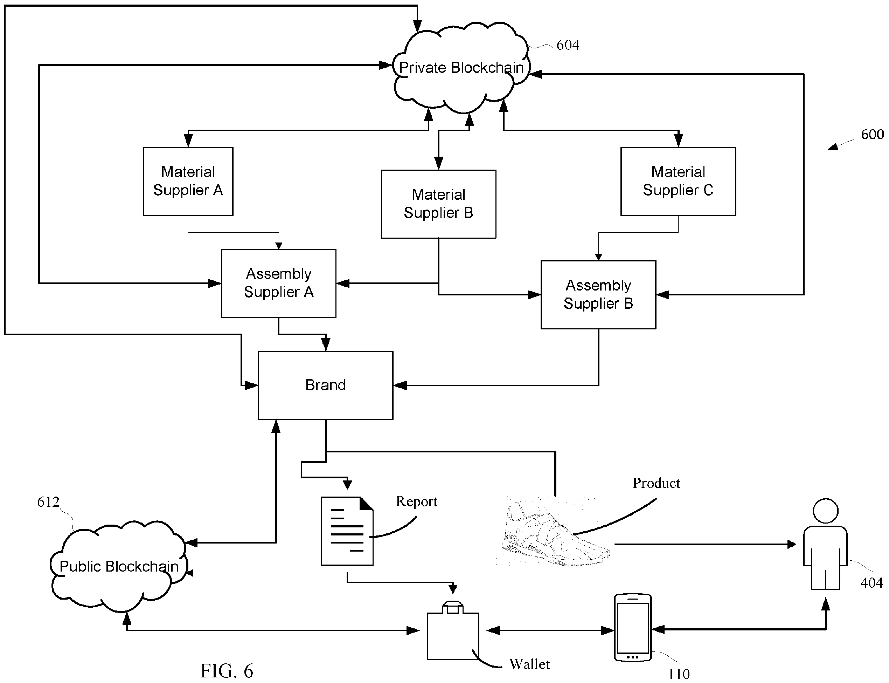

Referring to FIG. 6, one embodiment of a supply chain blockchain network (SCBC) 600 comprises a private blockchain 604 provided to communicate between the Original Manufacturer or Brand and entities that are upstream or downstream in the supply chain. For example, such entities can include suppliers, manufacturing or assembly facilities, shipping providers, and retailers or distributors, among other entities involved in the production, assembly, distribution, and delivery of products for the Brand. The private blockchain 604 is private, rather than being publicly accessible, and the parties included (*i.e.,* manufacturer, supplier, distributor, retailer, etc.) are all known, rather than being anonymous. Accordingly, the SCBC 600 is used in parallel with and additional to the public blockchain network 612 on which, *e.g.*, a footwear NFT may reside. The private blockchain 604 may be a permissioned blockchain, as described above. In some instances, the private blockchain 604 can be linked to the footwear NFT on the public blockchain 612, or metadata of the footwear NFT may include select information from the SCBC 600, for visibility by consumers and/or the public.

With continued reference to FIG. 6, the SCBC 600 comprises a network of nodes and communications, *e.g*., wireless communications, among various entities responsible for discrete aspects of the production of the product, *e.g.*, the footwear. It will be appreciated that the SCBC 600 functions similarly to or on the blockchain network 300 or 400 (see FIGS. 3 and 4). In particular, the nodes include a plurality of material suppliers that may include Material Supplier A, Material Supplier B, and Material Supplier C, and a plurality of assembly suppliers that may include Assembly Supplier A and Assembly Supplier B. In the illustrated embodiment, each of the Material Suppliers A, B and C and each of the Assembly Suppliers A and B is connected to the private blockchain 604 via a user device 110. It will be appreciated that the private blockchain is controlled or managed by the Brand as the host or ledger administrator (*e.g*., host system 424), although in some instances the private blockchain 604 may be managed by ledger administrators or by a decentralized autonomous organization (DAO), or another third-party service provider. Each of the Material Suppliers A, Band C and each of the Assembly Suppliers A and B maintains an inventory management system in connection with or residing on a server, accessible by a computer, and operably connected to and/or employing memory storage and communication mechanisms. Additionally, each of the Material Suppliers A, B and C and each of the Assembly Suppliers A and B has been granted limited access to the private blockchain 604. Accordingly, each of the Material Suppliers A, Band C and each of the Assembly Suppliers A and B is capable of two-way communication between the private blockchain 604 and the respective inventory management system via the communication mechanisms, computer, and server.

The inventory management system of each of the Material Suppliers A, B and C and each of the Assembly Suppliers A and B is responsible for containing information related to the functions and/or service provided to the SCBC. In some embodiments, Material Supplier A may provide, *e.g.,* a fabric material that is used to manufacture an upper of the footwear and, thus, Material Supplier A has an inventory management system that stores various characteristics of the fiber materials, *e.g*., amount, type, cost, availability, etc., which is communicated with and visible through the inventory management system's connection to the private blockchain 604, such that any other entity within the SCBC 600 has visibility of the relevant information on the information management system of Material Supplier A. In one instance, the Assembly Supplier B has an inventory management system that accounts for the information and changes associated with the upstream suppliers, *e.g*., Material Suppliers A and B. Likewise, the Brand has an inventory management system that accounts for the information and changes associated with each of the suppliers. As physical materials pass from the Material Supplier A to Assembly Supplier A, a shipping provider (not shown) may also be able to tap into and communicate with the private blockchain 604 as part of the SCBC 600, thereby allowing for improved visibility of timing for all entities involved.

Further, the SCBC 600 operates in the background, hidden from the public blockchain 612 and under the management of the Brand. As such, the transaction details among the entities may also be hidden from the private blockchain 604 and, thus, from disclosure among the entities or parties simply by way of the private blockchain 604. In this way, participation in the SCBC 600 is not overinclusive and only the pertinent and necessary information may be recorded in the private blockchain 604, such as the information associated with the function of each entity to perform the contractual obligations within the SCBC 600 to produce the desired product.

Additionally, as the private blockchain 604 is updated with each of the transaction details relating to the manufacture of the physical footwear, a digital representation of the physical footwear may be provided at real-time stages, *e.g*., by operation of a virtual object generator, such as the virtual object generator 412 of FIG. 4. To that end, the metadata of the NFT links to the physical footwear by way of the UPID that is stored within the metadata of the NFT and that corresponds to the physical footwear being manufactured. The metadata associated with the digital representation of the physical footwear may be updated and modified, whether by predetermined templates or image files associated with particular transaction/manufacturing details or by manual input from the entities comprising the SCBC 600, including the Brand. In this way, the digital representation of the physical footwear tracks and reflects in real-time the manufacturing progression of the physical footwear as it is produced through the SCBC 600. The digital footwear may be stored or reside in memory 210 on the various computing devices 110 and/or in memory 220 on the various servers 120 of the entities comprising the SCBC 600, including those of the Brand. Further, the digital footwear representing the manufacturing progression may be generated as a static image or as an animated short-form video, as examples.

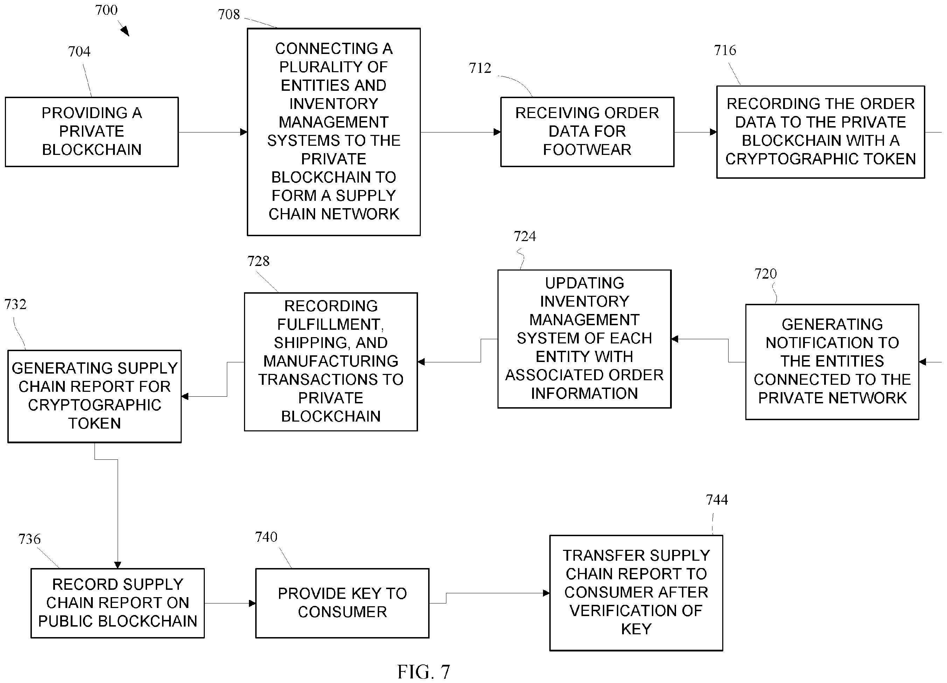

FIG. 7 depicts an exemplary process of implementing the SCBC 600. In the method 700 of FIG. 7, process block or Step 704 comprises the Brand providing the private blockchain 604 and, next, Step 708 involves connecting a plurality of entities and inventory management systems to the private blockchain 604 to form the SCBC 600. Step 712 of the method 700 includes the Brand receiving order data associated with manufacturing physical footwear and, in accordance with predetermined templates and a Bill of Materials, the Brand records the data, in Step 716, on the brand's local inventory management system, which assigns a unique product identifier UPID. Further, the Brand also mints the order details to the private blockchain 604 with a unique NFT that is then linked to the UPID of to-be-manufactured footwear. The data associated with manufacturing the footwear are recorded on the private blockchain 604, immutable and visible to all entities in the SCBC 600. Subsequently, Step 720 includes notifications being generated, *e.g*., automatically generated emails or invoices, to the relevant entities in the SCBC 600. In one instance, a particular quantity of fabric material is provided in the order details and the inventory management system of the Material Supplier A is updated to reflect a quantity or amount required to fulfill the order detail for fabric, in Step 724, along with other relevant details, *e.g*., timing or deadlines, styles, shipping locations, etc.

When Material Supplier A fulfills the order for fabric material, the order data associated with the UPID on the inventory management system is updated with the change in quantity and the fulfillment details are communicated to and recorded on the private blockchain 604 in association with the NFT, as in Step 728. In this way, the completion of each fulfillment Step along the supply chain triggers a transaction that is recorded and stored immutably, immediately, and visibly, on the private blockchain 604. It will be appreciated that the data may include a variety of aspects and details associated with manufacturing footwear, including standard or convention features, such as, *e.g*., materials of the upper, midsole, outsole, and the like, as well as optional features, such as, *e.g.*, lacing systems, signature emblems or logos, or any other feature or detail that may be envisioned for footwear.

As the various materials and assembly steps are received and fulfilled, each comprising a transaction that is recorded on the private blockchain 604, the respective inventory management systems of each entity are also updated in accordance with the UPID, such that inventory quantities are reduced or increased, or receiving and shipping statuses are changed, all in real-time. In some embodiments, smart contract features built into the cryptographic footwear ID or order details allow for expedited transactions, notifications, tracking updates, etc. to be provided without typical delays associated with manual entry or communication among various different systems.

In some embodiments, the Brand performs the final assembly of the footwear and the private blockchain 604 is updated accordingly with the fulfilled state of the order. Then in Step 732, the Brand generates a report, either automatically or by actuation, from the private blockchain 604 with various aspects of the SCBC 600 involved in manufacturing the footwear. The report can include a list of each transaction and corresponding details thereof from the private blockchain 604 associated with the NFT. Further, the report can include locations and biographies of the entities within the SCBC 600, materials and assembly techniques used, weights and sizes of various aspects of the footwear, and other details, as desired. In some instances, the Brand includes images of the footwear as assembled within the report. In some examples, the Brand includes a 3D model or instructions for rendering a 3D model of the footwear as-assembled within the report.

Subsequently in Step 736, the report is stored or minted to another blockchain, such as a public blockchain 612, where it can be made accessible to the user on a platform. In some examples, when the user receives the footwear, an ID tag may be provided that gives the user access to the particular footwear NFT, as in Step 740. In some embodiments, the ID tag may contain only a partial token or code that must be corroborated with, *e.g*., two-step authentication, email verification, or the like, to avoid theft or intervention. After the footwear is transported or shipped to the user, the user may access and view the footwear NFT by way of a user device 110, *e.g.,* a smartphone, and also may link the footwear NFT to the user's cryptographic wallet using the user device, or any other suitable device. It will be appreciated that the SCBC 600 is not limited to use with footwear and apparel.

Finally, the user may be provided with, by transfer of or mere viewing access to, the supply chain report, as in Step 744. Accordingly, the supply chain report may indicate authenticity, being recorded immutably on both the private blockchain 604 and, at least partially, on the public blockchain 612, for the user. The user and/or other consumers may then view the fulfillment details, which may be useful to a user concerned with sourcing. It shall be appreciated that the user may be a retailer or distributor, rather than an individual. Further, it shall be appreciated that the method 700 is applicable to bulk orders of footwear, or any other consumer good, rather than being limited to individual units.

In a similar manner, third-party shipping providers and retailers comprising the supply chain downstream of the original manufacturer may also be enabled to access and interact with a digital asset that corresponds with a tangible shoe or an order for a shoe. It will be appreciated that third-party shipping providers include various organizations, such as, *e.g.,* United Parcel Service (UPS), FedEx, DHL, etc. Further, retailers can include distributors and merchants of various sizes and relationships to original manufactures, such as, *e.g*., Puma Stores, Footlocker, Famous Footwear, DSW, Kohl's, Stadium Goods, etc., as well as online platforms or retailers, such as, *e.g*., StockX, Zappos, etc. Collectively, the third-party shipping providers and retailers may be referenced herein as mid-chain merchants. As the physical footwear moves through the supply chain, the corresponding digital asset or footwear NFT can be used to update the respective inventory management system.

In this way, NFTs, such as footwear NFTs, can be used as anti-counterfeiting tools to provide assurance of authenticity for both the purchaser and the Brand.

In some embodiments of an anti-counterfeiting technique for footwear, which may be used separately or in conjunction with other embodiments disclosed herein, *e.g.,* as disclosed in FIG. 7, the Brand mints the footwear NFT upon final assembly of the physical footwear, at which point the metadata associated with the footwear is included with the footwear NFT. It will be appreciated that the metadata may include *e.g*., UPC/UPID, model, style, size, colorway, time and date of final assembly, BOM, and the like. Further, the footwear is provided within a package or box on which an ID tag, *e.g.,* a QR code or barcode or RFID tag or the like, is affixed. Other peripheral hardware or devices include a user device 110 (e.g., a smartphone or a scanner), a server 120, communication network 130 or bus, resident and/or remote memory 210 and/or 220, and the like. As the footwear and/or package are moved through the supply chain from the Brand to, ultimately, the consumer, the ID tag may be manually or automatically sensed or scanned at several checkpoints. For example, one checkpoint may include the transfer of the footwear to a retailer that purchases the footwear itself for resale thereof. Upon transfer of the footwear to the retailer, the checkpoint details of the transfer, *e.g*., the parties involved, the transaction details, etc., are provided as a transaction on the blockchain in association with the footwear NFT.

Further, the metadata of the footwear NFT is cataloged in the inventory management systems of both the Brand and the retailer, and a notification is provided to the Brand and the retailer for verification. Accordingly, when the footwear NFT is accessed through the ID tag via the personal device 110, the checkpoint details associated with the footwear NFT are visible as transactions on the blockchain, which allows a user to verify authenticity of the footwear in connection with the Brand. The supply chain may include several of such checkpoints and, thus, the footwear NFT may be updated several times, iteratively. For example, when the footwear and/or packages are loaded into a vehicle for transport, the ID tags may be sensed or scanned by the shipping provider (*e.g*., transport driver) to access the footwear NFT(s), thereby verifying the authenticity thereof. Also, the shipping provider may cause a transaction associated with each footwear NFT to be recorded on the private blockchain 604, such that the transaction can record various checkpoint data of the linked physical footwear in transit, *e.g*., time location. Then, after the shipping provider unloads the footwear and/or packages, the ID tag may again be scanned or sensed to cause another transaction associated with the linked footwear NFTs to be recorded on the private blockchain 604. In some embodiments, a load of footwear and/or packages may include large quantities that are routinely transported over long distances within unsecured vehicles, which can leave the load of footwear to be susceptible to loss or theft. Accordingly, recording the checkpoint data in the transactions associated with the linked footwear NFTs on the private blockchain 604 can allow for authentication that nothing was lost or stolen along the way.

In some embodiments, the footwear NFT may have conditions and/or terms that are updated in connection with the transfer of the physical footwear between the brand and the third-party at each checkpoint. For example, the footwear NFT may include royalty or fee slots to be claimed by a third-party, *e.g*., a brand ambassador, a shipping provider, a distributor, or any other authorized entity, and the fee slot can be set at a pre-determined amount or value and subject to pre-determined conditions. It is well-known that consumers will pay more for signature products associated with or endorsed by particular celebrities, provided that the products are authentic and not counterfeit. To that end, anti-counterfeiting techniques using footwear NFTs on a blockchain network may allow for expedient, secure, and scalable operation of such authentication in a unique way.

In one instance, the fee slot is claimed by the third-party scanning or sensing the ID tag. The third-party's scanner, or other device, sends a notification or request to the footwear NFT's owner or author, *e.g*., the Brand. Upon approval, the third-party's credentials, tokens, and checkpoint details are exchanged with the owner of the footwear NFT. The fee slot may be optional, such that the third-party may decline to claim the fee slot, whether by deliberate election to waive the right to claim the fee or through deliberate or accidental incompletion violation of one or more conditions. The fee slot can operate as a royalty or fixed fee paid to the third-party claiming the fee slot in return for satisfaction of the conditions. The conditions may include acknowledgement of receipt by scanning/reading the ID tag, secure and sustainable storage or presentation of the footwear within a warehouse or showroom or vehicle, updating the location and timestamp of the footwear visible in the metadata, communication of the real-time status of inventory of the third-party, or some combination thereof, or other conditions. Further, the brand may implement a loyalty condition that only allows a third-party to claim the fee slot only if certain conditions are met. For example, in the case of a retailer or distributor, a condition may be that the third-party (a) lacks inventory of counterfeit or competitor products or (b) promises to have an absence of inventory of counterfeit or competitor products. To execute such condition, a search/lookup function embedded within the footwear NFT may run a search of the third-party's inventory database (*e.g*., a database accessible online and stored in a cloud server) at the time of the checkpoint, whether automatically upon scanning or after prompting a third-party to agree to such function. Further, the third-party may agree to forfeit any value received by the fee slot upon violation of the loyalty condition, in lieu of running such a search/lookup function at the time of checkpoint. As a result, the third-party is incentivized to perform each required condition and maintain an authentic, mutually-beneficial relationship with the brand. Additionally, consumers are incentivized to purchase the brand products from those third-parties who are "authorized" and within the supply chain network maintained by operation of such anti-counterfeiting techniques.

### BountyChain Anti-Counterfeiting

While brands desire to prevent counterfeit products for business and reputation purposes, users often face the greatest risk from the presence of counterfeit products in the marketplace. For example, counterfeit athletic shoes may lack material quality and construction sufficient to withstand the significant wear and stresses placed upon them, which can present a significant risk to a consumer's health and safety during use. One important way to combat counterfeits and the harms they pose to consumers, markets, brands, and reputations is to educate consumers on how to identify counterfeit products. Although consumers may desire to prevent counterfeit products from pervading the market, users are not often provided sufficient tools or incentives to do so. Further, consumers often desire the benefits of exclusivity and recognition associated with high-quality brands and products, and brands seek to garner the loyalty and trust of their consumers. In some instances, clubs are formed around a common interest for the mutual benefit of all, *i.e*., a non-zero sum game approach. In some instances, consumers work together with the brand to the benefit of both.

In an embodiment of an anti-counterfeiting technique, users may assist a brand in identifying and deterring counterfeit products to penetrate or persist in the market. Referring to FIG. 7, which depicts an example of an anti-counterfeiting process 800 according to an embodiment of this disclosure, process block or Step 804 comprises providing an online platform, such as, *e.g.,* the digital platform 416 of FIG. 4, which consumers can join as members and which comprises smart forms, *e.g*., software enabled forms with fields that are operably connected to various user preferences or data (cookies) to assist a user in populating the fields. The form is a preliminary form for submission of counterfeit product identification and evidence therefor. The consumer can elect to join the platform at any time, which may be promoted or encouraged as part of an anti-counterfeiting campaign. The Brand promotes the anti-counterfeiting campaign at various times and in various manners, such as, *e.g*., through seasonal campaigns focused on particular products. The anti-counterfeiting platform (ACP), as referenced herein, may be joined by creation of a digital profile and, also, allows for connection to a digital wallet, as indicated in Step 808 of the method 800. After the user joins the ACP, membership status is reached and benefits are unlocked, such as, *e.g*., exclusive access to offers and events, as well as participation in the anti-counterfeiting process 800 and access to the forms described herein. As a member of the ACP, the brand provides educational materials and content regarding anti-counterfeiting techniques, including how to identify counterfeit products. Users may wish to attain various levels of education in anti-counterfeiting techniques, where some consumers may only desire basic skills in identifying counterfeit products while searching on popular sites or in popular stores, and where other users may desire more advanced skills in identifying counterfeit products in various formats, settings, markets, and regions. Accordingly, the brand produces educational content that ranges from novice to expert anti-counterfeiting techniques, while also maintaining contact with the users and building trust.

In Step 812, the user identifies a counterfeit product, whether by employing anti-counterfeiting techniques learned through the educational content offered by the Brand in the ACC, or by any manner in which the user determines a counterfeit product has been identified. Further, Step 812 of the method 800 includes the user collecting evidence of the counterfeit product sold or offered for sale by an individual seller, an ecommerce site or marketplace, or the like. Collection of evidence can include taking photographs or video with a camera on a smartphone device, taking screenshots from an online site, copying an address, *e.g*., a URL link to an online ecommerce site or marketplace, confiscating the counterfeit products by legal means, or any other suitable manner of collecting evidence. Further, evidence of counterfeit products can include a photograph or video, an address or URL link to an online site, a screenshot of an online site, etc.

Step 812 also includes the user submitting the form with the collected evidence to a private blockchain or bountychain managed by the Brand. The bountychain can be a private blockchain network among the ACP members and the Brand, such as a permissioned blockchain where only members of the ACP may have access to the bountychain and the brand may limit their access in various ways to only particular tasks. For the user to submit evidence to the bountychain, the smart form is provided to the user to complete with required fields and optional fields. Some required fields may include, for example, a date of identification, attachment of some form of visual evidence or link, the user profile ID or wallet ID or address, and a check--box condition that the submission is made in good-faith. Some optional fields may include, for example, a brief explanation of the facts surrounding the identification of the counterfeit product, additional non-visual evidence, and corroboration by additional users or parties. Once the smart form is completed, the user chooses to submit the form to the brand bountychain.

In Step 816, the bountychain receives the submission of the smart form through the platform identifying the counterfeit product and begins a review process to determine whether the user has actually identified a counterfeit product. Then, Step 820 comprises a review process that may be performed by an algorithm operating as part of a smart contract. Additionally or alternatively, the review process of Step 820 may be supervised and/or performed in part or entirely by professionals, such as, *e.g*., attorneys, engineers, supply chain managers, purchasers, or any other qualified agent of the brand. Further, due diligence is undertaken to investigate the entity selling or offering the counterfeit product, as well as identification of other counterfeit products related to the submitted evidence, and validity and strength of the evidence submitted to identify the counterfeit product. Next, Step 824 includes a determination of the counterfeit product as a result of the completed review and investigation/diligence process. If the determination is YES, a counterfeit product has indeed been identified. If the answer is NO, either the counterfeit product has been determined not to be counterfeit or there is insufficient evidence to make a determination, which causes a notification to be provided to the user with the determination and associated message regarding any errors or issues with the evidence, as indicated in Step 828.

In Step 832, after a counterfeit product has been determined to have been identified by the evidence (determination=YES), all of the information related to the review process and evidence submission is recorded to the bountychain ledger and the user is notified of the result. The user and other ACP members can now see the recorded submission and review process information by accessing the bountychain. Then, Step 836 includes a formal report to be prepared and sent out to the seller and/or the local governing agency or authority to initiate any measures to prevent the counterfeit product(s) from continuing to be sold. In some instances, legal processes may be invoked in removing the counterfeit product from the market and pursuing legal action against the counterfeit seller and/or supply chain. Next, Step 840 includes minting a NFT to a blockchain ledger or network with a digital asset provided in the form of a link to a read-only, viewable format of the counterfeit record on the bountychain. In some embodiments, the digital asset may be an abridged and modified version of the counterfeit activity report sent to the seller and/or authority. In some embodiments, the digital asset may be the entire, complete counterfeit activity report sent to the seller and/or authority.

Then, optional Step 844 provides for transferring the minted NFT of the counterfeit record(s) to the user who identified the counterfeit products. Accordingly, the user is rewarded with an NFT on the blockchain and linked to the digital asset of the counterfeit report, which includes visual evidence of the counterfeit product. It is contemplated that the user may collect counterfeit report NFTs after successful identification and submission of counterfeit products to the Brand bountychain. Thus, the user may become decorated and acquire a reputation for identifying counterfeit products, which may accrue to the benefit of the user over time. Further, the Brand may optionally submit payment to the user in accordance with a pre-determined fee in a pre-determined currency, *e.g*., fiat, physical, crypto, etc.

For at least the reasons discussed herein, mechanisms in accordance with some embodiments of the present disclosure can be beneficial for tracking and maintaining inventory of material for manufacturing processes.

### Additional Methods

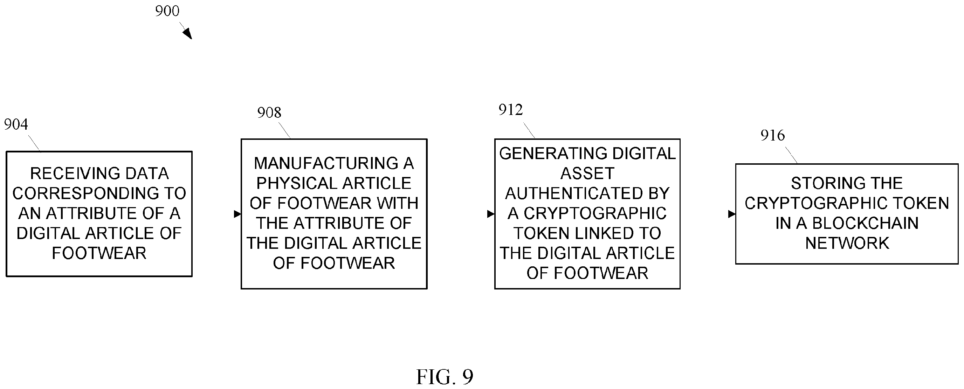

Referring to FIG. 9, a method 900 of preventing counterfeiting using NFTs is illustrated. Step 904 comprises receiving data or inputs from a user, such as a user accessing an online platform (*e.g*., platform 416) via a user device (*e.g*., user device 110, including a smartphone and user interface). In some embodiments, the data inputs correspond to at least one attribute of a digital article of footwear. In some embodiments, the attributes include a variety of features or aspects of footwear, such as, *e.g.,* a size, colorway, lacing system, plate design, signature features or custom lettering/symbols, and the like. Next, Step 908 includes manufacturing a physical article of footwear based on the one or more attributes of the digital article of footwear. In some embodiments, manufacturing the physical article may include or employ the SCBC 600 of FIGS. 6 and 7. In some embodiments, manufacturing the physical article of footwear includes the use of traditional manufacturing methods, such as, *e.g*., injection molding, weaving, fastening, sewing or stitching, heat pressing, cementing or adhering, interlocking, or any other conventional method of forming physical footwear. In some embodiments, manufacturing the physical footwear includes additive manufacturing methods, such as, *e.g*., printing layer-by-layer.

Then, Step 912 comprises generating a digital asset authenticated by an NFT. In some embodiments, the NFT includes metadata corresponding to the at least one attribute of the digital and physical article of footwear, as well as a date of manufacture of the physical article of footwear. In addition, Step 916 includes recording or storing the NFT in a blockchain network, such as, *e.g.*, the blockchain network 300, the blockchain network 408, the private blockchain 604, or the public blockchain 612. In some embodiments, the NFT is a single non-fungible token that establishes a one-to-one relationship with the physical footwear. In some embodiments, the NFT is a collection or plurality of non-fungible tokens that can be individually transferred. The collection of tokens may be generated using, *e.g.,* a permutation generator for producing recursive permutations associated with at least one of the attributes of the footwear. In some embodiments, the collection of tokens may be generated by applying a variety of image processing techniques or algorithms, such as, *e.g.,* color or tone filters, mosaic plots, binary image rendering, 8-bit image rendering, 16-bit image rendering, grayscale rendering, black-and-white rendering, whitewashing, brightness, contrast, sharpness, transparency, or any other image processing technique. It will be appreciated that the method 900 of FIG. 9 may be utilized in conjunction with the methods 500, 700, 800, and 1000 of the present disclosure. Further, any of the methods 500, 700, 800, 900, and 1000 may be executed, partially or entirely, in conjunction with the embodiments described below.

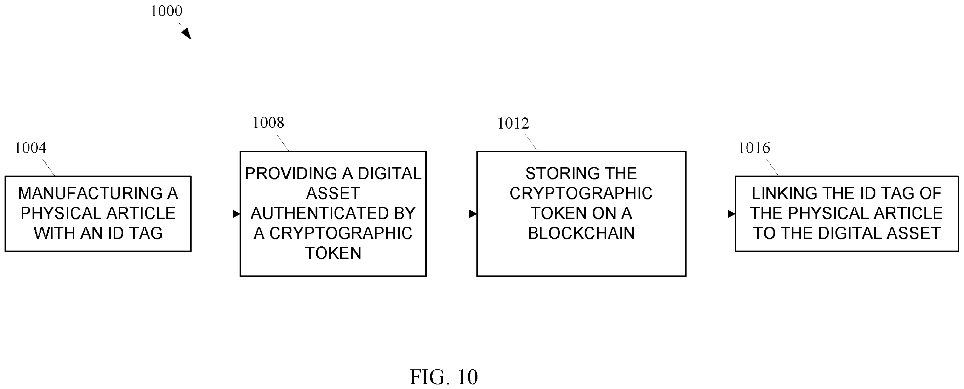

Referring to FIG. 10, a method 1000 of preventing counterfeiting using NFTs is illustrated. Step 1004 comprises manufacturing a physical article with an ID tag that is configured to be recognized by a device, e.g., user device 110 that includes a user interface, and communicates wirelessly over a communication network, *e.g*., communication network 130. An ID tag can be provided in the form of or include a barcode, a QR code, an RFID tag, or an NFC tag. The physical article can be footwear, apparel, headgear, or any other consumer good that may or may not be a collectable. The device may be smartphone, a tablet, a laptop, a barcode scanner, a smartwatch, or any other electronic device that is web-enabled and includes a user interface with an electronic display.

Step 1008 comprises providing a digital asset with a representation of the physical article and metadata. The digital asset is authenticated by an NFT, which may be a non-fungible token (NFT). The metadata includes a unique product identifier (UPID) corresponding to the ID tag of the physical article. Step 1012 comprises storing the cryptographically secured digital asset on a blockchain, such as, *e.g.,* the blockchain network 300, the blockchain network 408, the private blockchain 604, or the public blockchain 612.

Step 1016 comprises linking the ID tag of the physical article to the digital asset. When the ID tag is read by the device, the user interface of the device displays the cryptographically secured digital asset with the representation of the physical article. An online platform, e.g., platform 416, is displayed on the user interface of the device when the ID tag is read or recognized. In some embodiments, the online platform comprises a plurality of cryptographically secured digital assets, such as, *e.g.,* a storefront or a list or a marketplace for such digital assets. In some embodiments, the metadata includes attributes associated with the physical article. The attributes can include a colorway, a size, a material, a date of manufacture, or any other information associated with the physical article. It will be appreciated that the method 1000 of FIG. 10 may be utilized in conjunction with the methods 500, 700, 800, and 900 of the present disclosure. Further, any of the methods 500, 700, 800, 900, and 1000 may be executed, partially or entirely, in conjunction with the embodiments described below.

### Generating an NFT using Virtual Reality (VR), Augmented Reality (AR), and/or a Graphical User-Interface (GUI)

### GUI:

Some embodiments of the present disclosure may include generating an NFT by customizing elements of an article of footwear on a user-interface (*e.g*., a website, a computer application, a mobile application, etc.). Using the user-interface, a user may select preferences for various attributes of the article of footwear. The user may then select an orientation of the article of footwear, capture an image of the article of footwear in the selected orientation, and input metadata to the NFT corresponding to the captured image.

A graphical user interface (GLTI) may be used to generate a footwear NFT. Specifically, the graphical user interface may be used to customize aspects of a digital article of footwear, and assign values to metadata segments of the footwear NFT. Using a personal device 110, a user may access a website, computer application, a web-based applet, or a mobile application that includes a menu. After selecting the menu option, a list of one or more customizable features may be displayed. The user may select a predetermined option for each of the one or more features. By selecting an option for each of the one or more features, a user may assign a value to each of the metadata segments of a footwear token.

After assigning values to each of the metadata segments of a footwear token, the user may purchase a physical article of footwear corresponding to the digital article of footwear displayed via the graphical user interface (GUI). Upon purchasing the physical article of footwear, the digital article of footwear may be minted in a blockchain ledger. Effectively, the user may own a physical article of footwear, as well as a digital article of footwear that corresponds to the physical article of footwear that was purchased.

### VR:

Some embodiments of the present disclosure may include generating an NFT by customizing elements of an article of footwear in a virtual reality environment (*e.g*., while wearing a virtual reality headset). While wearing the virtual reality headset, a user may view an article of footwear. The article of footwear may be displayed on a table, on a virtual character (*e.g*., a person, or an animal), or in front of any environmental display (*e.g.,* a plain colored background, a sporting field background, a street, a retail store, *etc.*)*.* Within the virtual reality environment, a user may select preferences for various attributes of the article of footwear. The user may then select an orientation of the article of footwear (*e.g*., by rotating the article of footwear in the virtual reality environment). The user may further capture an image of the article of footwear in the selected orientation, and input metadata to the NFT corresponding to the captured image.

Further, a virtual reality environment may be used to generate a footwear NFT. Specifically, the virtual reality environment may be used to customize aspects of a digital article of footwear, and assign values to metadata segments of the footwear NFT. The virtual reality environment may include a menu that is selectable by a user. After selecting the menu option, a list of one or more customizable features may be displayed. The user may select a predetermined option for each of the one or more features. By selecting an option for each of the one or more features, a user may assign a value to each of the metadata segments of a footwear token.

After assigning values to each of the metadata segments of a footwear token, the user may purchase a physical article of footwear corresponding to the digital article of footwear displayed via the graphical user interface. Upon purchasing the physical article of footwear, the digital article of footwear may be minted in a blockchain ledger. The blockchain ledger may be stored in a blockchain network. Effectively, the user may own a physical article of footwear, as well as a digital article of footwear that corresponds to the physical article of footwear that was purchased.

### AR:

Augmented reality may provide the ability for computer-generated images to be superimposed on a user's view of the physical world. Effectively, augmented reality may be used to add a virtual layer to the physical world. In some embodiments of the present disclosure, augmented reality may be used to display 2-dimensional or 3-dimensional images that are stored in the metadata of non-fungible tokens saved to a blockchain network. For example, digital articles of footwear, and digital articles of apparel may be shown in augmented reality via the use of augmented reality glasses, smartphones, cameras, or other computing devices with optic lenses that may superimpose computer-generated images onto a user's view of the physical world.

Some embodiments of the present disclosure may include generating an NFT by customizing elements of an article of footwear in an augmented reality environment (*e.g*., while wearing augmented reality glasses, or while interacting with an augmented reality environment on a smartphone or other computing device). While navigating the augmented reality environment (*e.g.,* while wearing the augmented reality glasses, or interfacing with a display screen on a computing device with an optical lens), a user may view an article of footwear. The article of footwear may be displayed on a surface in the physical world. Additionally, or alternatively, the article of footwear may be displayed on a user's body (*e.g.,* on a foot or sock). Within the virtual reality environment, a user may select preferences for various attributes of the article of footwear. The user may then select an orientation of the article of footwear (*e.g*., by rotating the article of footwear in the virtual reality environment, or by rotating the augmented reality environment). The user may further capture an image of the article of footwear in the selected orientation, and input metadata to the NFT corresponding to the captured image.

An augmented reality environment may be used to generate a footwear NFT. Specifically, the augmented reality environment may be used to customize aspects of a digital article of footwear, and assign values to metadata segments of the footwear NFT. The virtual reality environment may include a menu that is selectable by a user. After selecting the menu option, a list of one or more customizable features may be displayed. The user may select a predetermined option for each of the one or more features. By selecting an option for each of the one or more features, a user may assign a value to each of the metadata segments of a footwear token.

After assigning values to each of the metadata segments of a footwear token, the user may purchase a physical article of footwear corresponding to the digital article of footwear displayed via the graphical user interface. Upon purchasing the physical article of footwear, the digital article of footwear may be minted in a blockchain ledger. The blockchain ledger may be stored in a blockchain network, such as, e.g., the blockchain network 300, the blockchain network 408, the private blockchain 604, or the public blockchain 612. Effectively, the user may own a physical article of footwear, as well as a digital article of footwear that corresponds to the physical article of footwear that was purchased.

It will be appreciated that any of the processes and systems disclosed herein may be used with any product or consumer good. For example, a sock may be used in accordance with some embodiments to display a digital article of footwear in an augmented reality environment. The sock may include a toe, a heel, a medial side, a lateral side, a top side, a bottom side, and one or more visual indicators. A navicular may be located on the top side corresponding to the navicular of a wearer's foot. A first or top visual indicator may extend along a top of the sock between the navicular and the toe. A second or medial visual indicator extending along a medial side of the sock between the heel and the toe. A third or lateral visual indicator extending along a lateral side of the sock between the heel and the toe. A fourth or toe visual indicator extending along the toe of the sock between the medial and the lateral side. A fifth or heel visual indicator extending along the heel of the sock between the medial and the lateral side.

The one or more visual indicators may be solid lines with a known hue or thickness that is recognizable to a computing device using visual processing mechanisms according to some embodiments. Alternatively, the one or more visual indicators may be dashed lines with a known distance between dashes, thereby making the visual indicators easily recognizable to a computing device using visual processing mechanisms according to some embodiments. Alternatively, the one or more visual indicators may be patterned (*e.g*., diagonal dashes, boxes, or dots) with a known design that is easily recognizable to a computing device using visual processing mechanisms according to some embodiments.

The computing device may generate the digital article of footwear by displaying the top of a footwear upper to be projected along the top visual indicator. The computing device may generate the digital article of footwear by displaying a heel of the footwear to be projected along the heel indicator. The computing device may generate the digital article of footwear by displaying a medial side of the footwear to be projected along the medial indicator. The computing device may generate the digital article of footwear by displaying a toe of the footwear to be projected along the toe indicator. Generally, the visual indicators may be used to constrain a digital article of footwear to the sock to allow a user to accurately see how a physical article of footwear, corresponding to the digital article of footwear, would look when worn in the physical world.

### Manufacturing Aspects of an Article based on an NFT

As discussed earlier herein, digital assets (*e.g*., the digital footwear, or digital apparel discussed earlier herein) according to some embodiments of the present disclosure may be linked or distributed with a 2D or 3D design file such as a (computer-automated design) CAD model, graphical rendering, image, or drawings package from which a physical product may be constructed or otherwise represented.

Some aspects of an article of footwear may be manufactured using 3D printing. A computing device, *e.g.,* a user device 110, in communication with a 3D printer may receive an NFT comprising metadata corresponding to a digital article of footwear. A user may put a portion of an article of footwear into a 3D printer, and the 3D printer may print a portion of the article of footwear based on a 3D design file corresponding to the digital article of footwear. For example, a user may put an article of footwear comprising an upper and a midsole into a 3D printer, wherein the upper and the midsole match the upper and the midsole of the digital article of footwear. The 3D printer may then print an outsole onto the midsole based on the metadata in the NFT receive by the 3D printer. The NFT may then update the token to indicate the date of manufacture of the outsole.

In some embodiments, a physical article of footwear may include an accessory or structural element, such as a shoelace or plate, respectively. For example, in connection with the plate embodiment, the plate could be a propulsion plate for returning energy to a user at or just-before toe-off, or a rock plate for absorbing and/or resisting deformation due to impact on uneven terrain (*e.g.,* rocks, twigs, trails, and the like). A user may desire to customize the plate for a proper fit and performance tailored to her particular needs, such as by tuning the concentration of reinforcing elements, *e.g*., carbon fibers embedded within the plate, to suit particular needs. In some examples, the plate is capable of being custom printed layer-by-layer with reinforcement elements located in accordance with inputs, e.g., measurements, taken from a user's foot and/or gait analysis. Often the inputs are incorporated into a system capable of generating a 3D model, which allows for running simulations and adjustment of the plate. The system is also capable of generating instructions that are configured to be read by a 3D printer to manufacture the plate in accordance with the 3D model. However, often the plate is entirely concealed within the sole structure or only partially visible from an exterior of the footwear, such that only the 3D model or rendering is available to the user as a visual of the plate. Thus, users desire verification or authentication that the customized plate design and rendered in the 3D model is, in fact, the plate installed within the footwear.

Accordingly, the 3D model is provided in the form of a file, such as, *e.g.,* a .dwg, .prt, .model, .par, .asm, or the like, and a digital asset is generated with the 3D model and minted as an NFT on a blockchain, in accordance with the process 900 of FIG. 9. When the NFT is minted, various details and aspects of the customized plate and 3D model are included, such as, *e.g.,* the UPID of the plate, date and time of creation, material composition, stiffness and/or resistance profile, dimensions, weight, shape, size, designer name or identification, user name or identification, date of assembly in the footwear, UPID of the footwear, and the like. Further, the NFT may include a digital representation of the customized plate based on the 3D model. Because the NFT is minted with to the blockchain, it becomes immutable. As a result, the user is provided with a visual representation of the customized plate and authentication, in the form of the NFT, that the customized plate is linked to and assembled within their footwear.

In some embodiments, any suitable computer readable media can be used for storing instructions for performing the functions and/or processes described herein. For example, in some embodiments, computer readable media can be non-transitory. For example, non-transitory computer readable media can include media such as magnetic media (such as hard disks, floppy disks, *etc.*), optical media (such as compact discs, digital video discs, Blu-ray discs, *etc.*), semiconductor media (such as RAM, Flash memory, electrically programmable read only memory (EPROM), electrically erasable programmable read only memory (EEPROM), *etc.*), any suitable media that is not fleeting or devoid of any semblance of permanence during transmission, and/or any suitable tangible media.

The above-described aspects of the processes of FIGS. 5 and 7-10 can be executed or performed in any order or sequence not limited to the order and sequence shown and described in the figures. Also, some of the above aspects of the processes of FIGS. 5 and 7-10 can be executed or performed substantially simultaneously where appropriate or in parallel to reduce latency and processing times.

Although the invention has been described and illustrated in the foregoing illustrative embodiments, it is understood that the present disclosure has been made only by way of example, and that numerous changes in the details of implementation of the invention can be made without departing from the spirit and scope of the invention, which is limited only by the claims that follow. Features of the disclosed embodiments can be combined and rearranged in various ways.

## Claims

1. A method of preventing counterfeiting using non-fungible tokens, the method comprising:
manufacturing a physical article with an ID tag that is configured to be recognized by a device that includes a user interface and communicates wirelessly over a communication network;
providing a digital asset with a representation of the physical article and metadata, wherein the digital asset is cryptographically secured by a non-fungible token, and wherein the metadata includes a unique product identifier corresponding to the ID tag of the physical article;
storing the non-fungible token on a blockchain; and
linking the ID tag of the physical article to the digital asset, wherein, when the ID tag is read by the device, the user interface of the device displays the cryptographically secured digital asset with the representation of the physical article.

2. The method of claim 1, wherein the physical article is a pair of footwear.

3. The method of any of the preceding claims, wherein the device is a smartphone.

4. The method of any of the preceding claims, wherein the ID tag is at least one of a barcode, a QR code, an RFID tag, or an NFC tag.

5. The method of any of the preceding claims, wherein an online platform is displayed on the user interface of the device when the ID tag is read, the online platform comprising a plurality of cryptographically secured digital assets.

6. The method of claim any of the preceding claims, wherein the metadata includes attributes associated with the physical article, the attributes including at least one of a color a size, a material, or a date of manufacture.

7. A method of preventing counterfeiting using non-fungible tokens, the method comprising:
receiving data corresponding to an attribute of a digital article of footwear;
manufacturing a physical article of footwear to include the attribute of the digital article of footwear;
generating a digital asset that is cryptographically secured by a non-fungible token, wherein the digital asset is linked to the digital article of footwear by an address, the non-fungible token comprising metadata corresponding to the attribute of the digital article of footwear, and a date of manufacture of the physical article of footwear; and
storing the non-fungible token in a blockchain network.

8. The method of claim 7, wherein the digital asset is configured to be transferrable to a third party.

9. The method of claims 7 or 8, wherein the attribute includes at least one of a footwear color, a footwear size, a plate design, a signature, or a date of purchase.

10. The method of any of claims 7-9, wherein the non-fungible token is a single token.

11. The method of any of claims 7-9, wherein the non-fungible token is a collection of non-fungible tokens associated with a plurality of digital assets created, in part, using a permutation generator.

12. The method of any of claims 7-11 wherein the blockchain network is a private blockchain network.

13. A method of preventing counterfeiting using non-fungible tokens, the method comprising:
providing a network comprising a plurality of entities in communication with a private blockchain having a host administrator, wherein each entity has been granted limited access to the private blockchain, and wherein each entity maintains an inventory management system that is in communication with the private blockchain;
receiving data associated with manufacturing physical footwear, the data containing a first detail and a second detail related to the footwear;
recording the first detail and the second detail to the private blockchain, such that the first and second details are cryptographically secured by a non-fungible token;
generating notifications regarding the first detail and the second detail associated with the non-fungible token among the plurality of entities;
updating the inventory management system of a first entity of the plurality of entities in accordance with the first detail;
updating the inventory management system of a second entity of the plurality of entities in accordance with the second detail; and
recording a transaction related to the non-fungible token, wherein the transaction is triggered by any one of the plurality of entities.

14. The method of claim 13, wherein the first detail is at least one of a material, a size, a color, a model, or an optional feature.

15. The method of claims 13 or 14, wherein the plurality of entities includes at least one of a shipping provider, a material supplier, an assembly supplier, or an ambassador.

16. The method of any of claims 13-15, wherein a report is generated by the host administrator, the report containing a list of the transactions recorded on the private blockchain associated with the non-fungible token.

17. The method of any of claims 13-16, wherein the report is stored on a public blockchain.

18. A method of preventing counterfeiting using non-fungible tokens, the method comprising:
receiving data associated with a counterfeit product, wherein the data is received from a user registered with an online platform, the data including an address to an ecommerce site where the counterfeit product is offered for sale;
generating a digital asset with a virtual object based on the data and cryptographically secured by a non-fungible token;
storing the non-fungible token in a blockchain network;
generating a notification to the ecommerce site, wherein the notification includes the data; and
transferring the digital asset to the user via the online platform.

19. The method of claim 18, wherein the ecommerce site may be an individual seller, a marketplace, a distributor, a retailer, or a manufacturer.

20. The method of claims 18 or 19, wherein the digital asset includes metadata corresponding to the user, the metadata including a score associated with the user on the platform.

21. The method of any of claims 18-20, wherein a score associated with the ecommerce site is generated.
